Europäisches Patentamt

European Patent Office

Office européen des brevets

(11) Publication number: **0 314 279**
**A2**

# EUROPEAN PATENT APPLICATION

(21) Application number: 88308112.7

(51) Int. Cl.4: **G06F 15/40**

(22) Date of filing: **01.09.88**

(30) Priority: **30.10.87 US 115457**

(43) Date of publication of application:
**03.05.89 Bulletin 89/18**

(84) Designated Contracting States:
**DE FR GB IT**

(71) Applicant: **International Business Machines Corporation**
**Old Orchard Road**
**Armonk, N.Y. 10504(US)**

(72) Inventor: **Hernandez, Irene Hernandez**
**13304 Council Bluff Drive**
**Austin Texas 78727(US)**
Inventor: **Ogden, William Craig**
**Clayallee 242**
**D-1000 Berlin 37(DE)**
Inventor: **Sordi, Joseph John**
**212 Marchmont Drive**
**Los Gatos California 95032(US)**

(74) Representative: **Hawkins, Anthony George Frederick**
**IBM United Kingdom Limited Intellectual Property Department Hursley Park**
**Winchester Hampshire SO21 2JN(GB)**

(54) System and method for database operations.

(57) A data base manager system operates a relational data are stored in a memory. The system sequentially generates a plurality of prompt screens on a display. Operator responses thereto, input at keyboard, define a query statement which, when executed by a processor retrieves a correlative data subset from the memory. The query is comprised of clauses. A plurality of sequential prompt screen-responses specify at least one of the clauses. Available valid response choices and/or response instructions displayed in a screen automatically appear and are varied as a function of response to the prior screen. In one embodiment, the left side, comparison operator, and right side of a row condition clause are each specified by at least one prompt screen-response. When the left side or right side is complex including a summary function or expression, a sequential plurality of prompt screen-responses specifies the respective left or right side. The system enables a database user to specify complex query statements without knowledge of the syntax and semantics of the query language.

FIG. 2

## SYSTEM AND METHOD FOR DATABASE OPERATIONS

This invention relates to database operations and, more particularly, to the formulation of search commands by an operator for retrieving selected data therefrom.

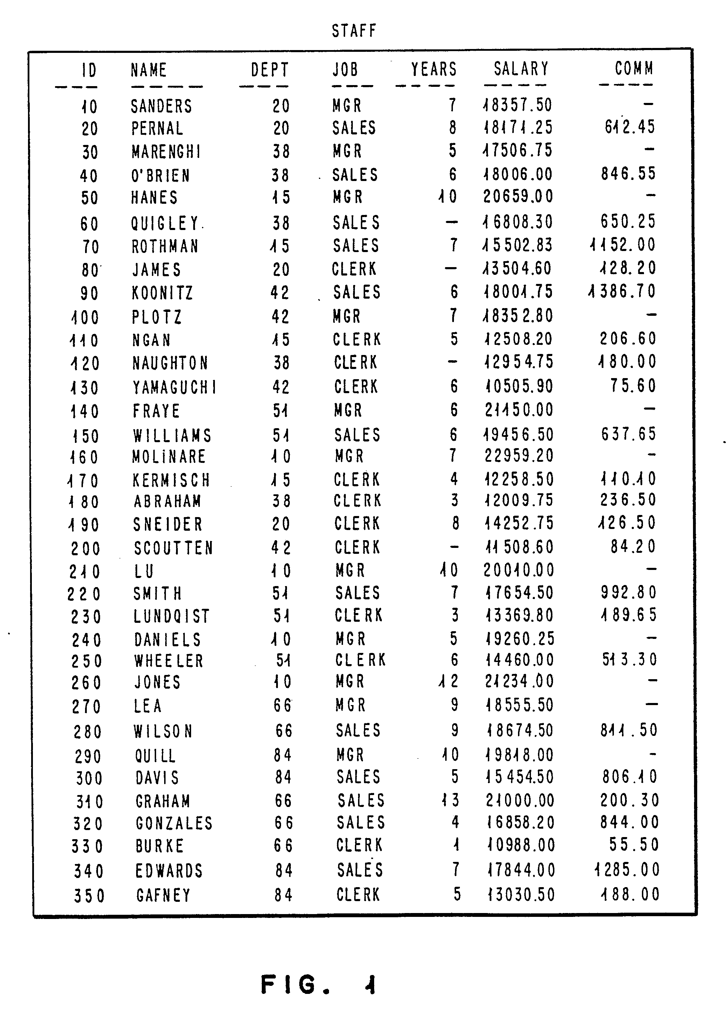

In the computerised database field, vast quantities of data are stored in computer systems, a greatly simplified but nevertheless illustrative schematic example of which might be information relating to a manager's staff as depicted in Fig. 1.

For a database to be useful, the ability to retrieve only a selected subset of the data satisfying a correspondingly unique set of conditions is highly desirable. As but a simple example, the manager may wish to obtain a list from the aforementioned database of only those employees' names starting with "W" and their i.d. numbers.

In order to meet this need, various computerised systems have been developed for retrieving such information. These systems typically include a computer program, commonly referred to as a database manager, for storing, editing, updating and retrieving data in response to various commands entered through a user interface. Specifically, with respect to retrieval of data, numerous computer languages were devised for formulating search commands or "queries" to which the database manager was responsive in providing the requested data. These queries were basically search instructions encoded so as to cause a computer and associated database manager to carry out the desired search.

Several problems have been associated with these languages for formulating database queries. First, many of the query languages differed from conventional programming languages. The database user with programming experience was thus required to learn an entirely new set of commands just to get meaningful data out of the database. Users without such experience, such as many terminal operators who are also without computer experience of any kind, were thus forced to learn a form of computer programming just to interact with the database. Moreover, such query languages required knowledge of highly complex syntax and semantics rules, thereby further limiting the numbers who could successfully retrieve data to only a highly and expensively trained few. This, in turn, adversely affected the utility of such computer systems and seriously inhibited their use by a widespread number of individuals.

A representative such query language is the Standard Query Language or "SQL" detailed in the Draft Proposal, ANA Database Language SQL, Standard X3.135-1986, American National Standard Institute, Inc., 1430 Broadway, New York, New York 10018. Detailed discussion of SQL is also set forth in "IBM Database 2 SQL Reference" Document Number SC26-4346-3, IBM Corporation.

Efforts were made to simplify the knowledge required to formulate a database retrieval command, thereby rendering access to the database more "user friendly". This gave rise to several techniques such as less formal fourth level, non-procedural, or "natural" query languages. Search commands derived therefrom had many attributes of natural speech patterns and thus were easier to formulate. Other approaches to assist less technically sophisticated users in query formulation included query-by-form, query-by-example, various user aid help menus, and the like, wherein operator responses were sought to more-or-less user-friendly graphics interfaces.

Whereas such techniques were helpful to some degree in assisting users in formulating search statements, they were nevertheless limited to relatively straightforward and simple search criteria as the hereinbefore noted example. When more sophisticated queries were desired, such as a listing from Fig. 1 of all employees having a salary plus commission between $20,000-$40,000, they could not be readily constructed without a more detailed knowledge of the syntax and semantics of the query language, thereby once again seriously restricting utility of the database.

Thus, in summary, less-trained operators were unable to use complex query languages. On the other hand, techniques for reducing the required syntactic and semantic knowledge thereby limited the complexity of the queries which could be constructed and executed.

Techniques have long existed for assisting operators in providing proper commands to computers, often taking the form of help screens or menus which provide command information and choices to the user during program execution. However, typically some knowledge of the command languages was required of the user.

U.S. Patent 4,506,326, entitled "Apparatus and Method for Synthesizing a Query for Accessing a Relational Database" discloses a more user friendly graphic query in query by example (QBE) syntax wherein a linear query is synthesized from the graphic query input at a user terminal.

IBM Technical Disclosure Bulletin, Vol. 27, No. 9, February 1985, page 5140, entitled "Relational Database Features for Natural-Language Interface Grammars" details mapping general natural-language terms into corresponding formal database query languages.

IBM Technical Disclosure Bulletin, Vol. 25, No. 11A, April 1983, page 5499, entitled "Model Query Generation" discloses a mechanism giving the user capability to specify certain query operations without knowledge of a query language.

Several commercially available software database products embodied several techniques for enabling the user to query the database with little knowledge of the query language. A product sold under the product name "PC Focus" is available from Information Builders Incorporated, 1250 Broadway, New York, New York 10001. Other such products include those sold under the products name "Easy SQL" (IBM Corporation, Old Orchard Road, Armonk, New York 10504); "Paradox" (Ansa Software, 1301 Shoreway Road, Bellmont, California 94001); and "dBaselll +" (Ashton-Tate, 20101 Hamilton Avenue, Terrence, California 90502).

It is an object of the present invention to provide a simplified system and method for operator formulation of complex query statements executable by computerised databases.

According to the invention, there is provided a method of operating a computer system for generating a search command clause for accessing a database comprising the steps of: generating an displaying a first prompt relating to a first component of the clause; registering a response to said first prompt; generating and displaying a second prompt relating to a second component of the clause in response to the registered response to said first prompt; and registering a response to said second prompt, wherein said registered responses comprise required components of the search command clause.

There is also provided a data processing system for database operation comprising means for generating and displaying a first prompt relating to a first component of a search command clause for the database, means for registering a response to said first prompt, means for generating and displaying a second prompt relating to a second component of the clause and means for registering a response to said second prompt, wherein said registered responses comprise required components of the search command clause.

In an embodiment of the invention to be described in detail later, an arrangement for generating operator-specified complex query statements is shown. A query is comprised of a plurality of clauses. For each clause, at least one prompt screen is displayable requesting operator response(s) in order to specify the clause. Each screen may include a plurality of possible valid response choices satisfying the requested response, whereby the operator selects the appropriate prompted choice. Alternatively, the operator may key in a proper non-listed response based upon instruction provided in the screen(s).

For some clauses, a sequence of prompt screen-operator responses result from sequential display of a plurality of prompt screens and recording of responses, thereby defining the respective clause. Available valid response choices and/or response instructions displayed in a screen automatically appear and vary as a function of response to a prior window. Upon operator completion of requested responses for all prompt screens associated with a clause, one or more prompt screens requesting information for defining the next clause are automatically displayed.

The left side, comparison operator, and right side of a row condition clause are each specified by at least one prompt screen-response. When the left side specification is completed, a different prompt screen for the conditional operator automatically appears displaying a different set of valid response choices which vary as a function of response(s) to the left side prompt screen(s).

Prompt screen-operator responses are provided for specifying a row clause of a query wherein the left side or first component of the clause may be complex. A first prompt screen is displayed for the first component and operator response thereto is recorded. A second prompt screen for the component is thence automatically displayed which varies as a function of the particular response to the first prompt screen. Valid response choices to the first screen include a prompt for a summary function or an expression. If the summary function or alternatively the expression choice is selected by the operator, the second prompt screen automatically displayed requests information necessary to specify the summary function or the expression, respectively. Thus, a sequential plurality of prompt screen display-responses is automatically provided for defining a complex first component of a row clause.

The embodiment of the invention will now be described, by way of example, with reference to the accompanying drawings, in which:

Fig. 1 is an illustration of a representative database table;

Fig. 2 is a simplified flow diagram depicting steps in formulating a query statement and the clauses thereof;

Figs. 3A, 3B, 3C, 3D, and 3E are a representative sequence of prompt screens including operator responses for formulating a query;

Fig. 3F is a data output table from the table of Fig. 1 after execution of the query formulated in Figs. 3A-3E;

Figs. 4A, 4B, 4C, and 4D are a representative sequence of prompt screens including operator responses for formulating another type of query;

Fig. 4E is a data output table from the table of Fig. 1 after execution of the query formulated in Figs. 4A-4D;

Figs. 5A, 5B, 5C, 5D, 5E, 5F, 5G, and 5H are a representative sequence of prompt screens including operator responses for formulating yet another type of query;

Fig. 5I is a data output table from the table of Fig. 1 after execution of the query formulated in Figs. 5A-5H;

Figs. 6A, 6B, 6C, 6D, 6E, and 6F are a representative sequence of prompt screens including operator responses for formulating yet another type of query;

Fig. 6G is a data output table from the table of Fig. 1 after execution of the query formulated in Figs. 6A-6F;

Fig. 7 is a simplified flow diagram depicting steps in formulating a row clause of a query statement;

Figs. 8A, 8B, 8C, and 8D are more detailed flow diagrams of the query statement formulating steps shown in the flow diagrams of Fig. 2 and Fig. 7;

Fig. 9 shows the mapping of clause nomenclature of a representative complex query language (SQL);

Fig. 10 shows the detailed syntax and semantics of a representative complex query language SQL SELECT statement; and

Fig. 11 shows a schematic representation of the computerised relational database system of the present invention.

The present invention provides a user interface for formulating complex search instructions or "query" statements which are useful in retrieving selected information from computer databases. The purpose of this system is to provide a user-friendly interface whereby minimal knowledge is required from the end user with respect to syntax and semantic constraints of the associated query language in order to properly formulate a query. The embodiment disclosed is related to a relational database product.

In operation, an operator provides a query to the relational database program in order to obtain a subset of the information stored in the database. For example, the operator needs a report listing all employees' names starting with "W" and their i.d. numbers from a database represented by Fig. 1. Those knowledgeable in the use of the high level query languages such as the hereinbefore noted Structured Query Language (SQL) are able to provide a single instruction to perform this function. However, those not familiar with SQL would not easily be able to provide the instruction in accordance with the proper syntax and semantics to accomplish this task.

The embodiment of this invention provides a system for sequentially prompting the user through the various elements of the syntax and semantics of a complex query statement without requiring prior knowledge thereof. More particularly, a system is disclosed wherein a query is broken into individual clauses each of which is then defined by user response to sequential prompts. Complex clauses of the query are defined by user response to a plurality of sequential prompts for the particular clause, thereby obviating the user's need for syntax and semantics knowledge of the particular query language.

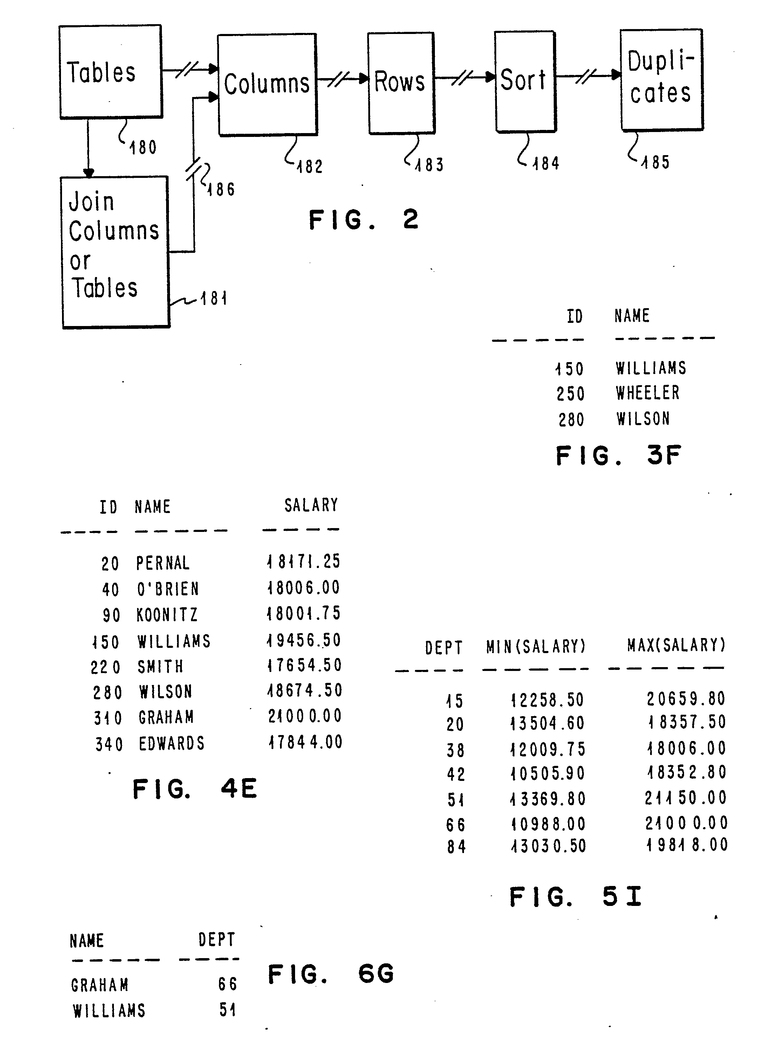

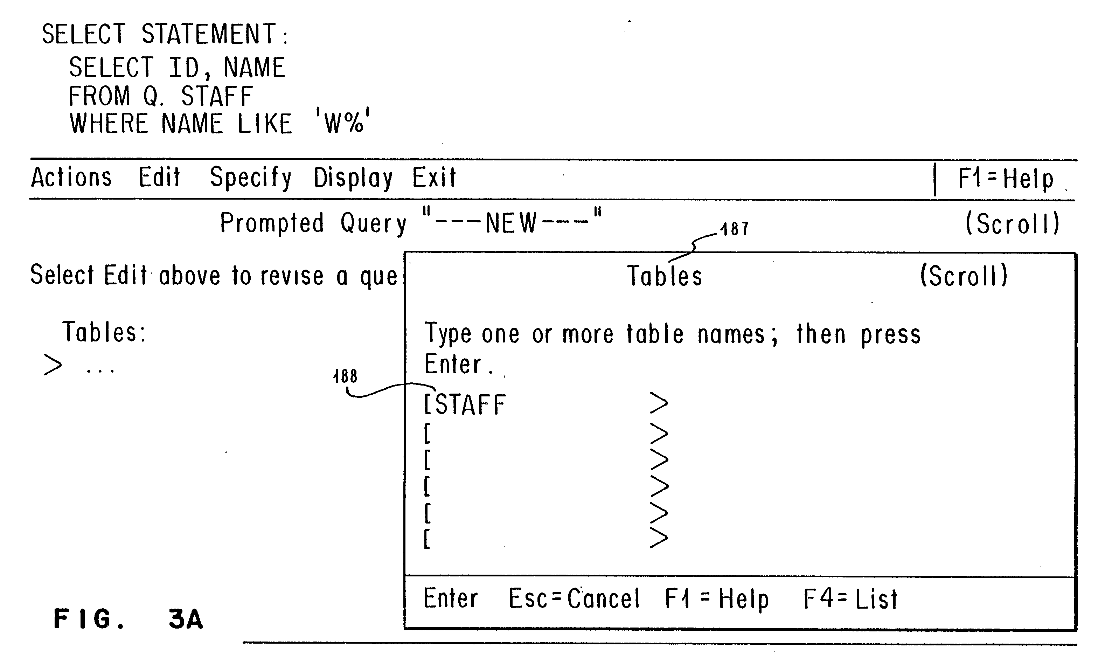

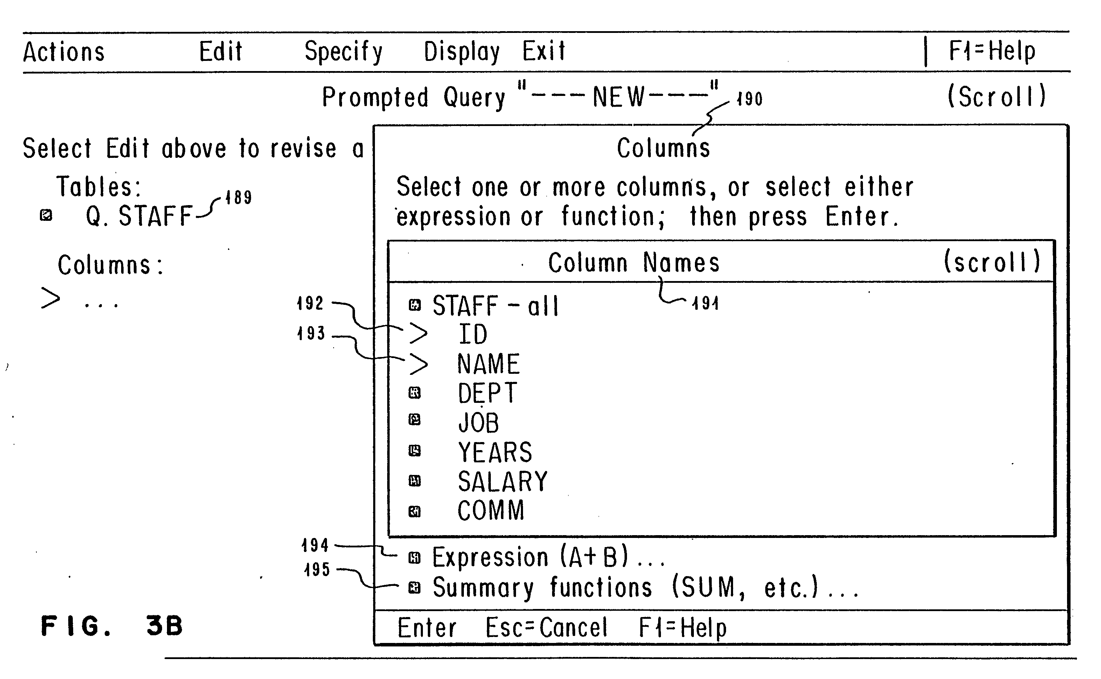

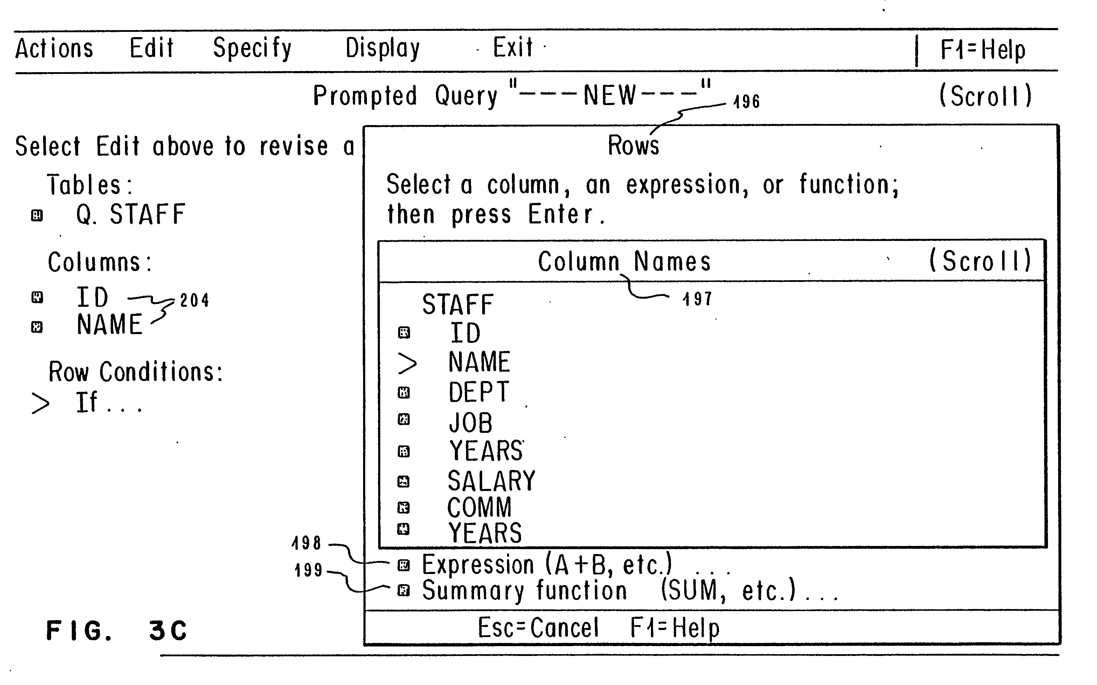

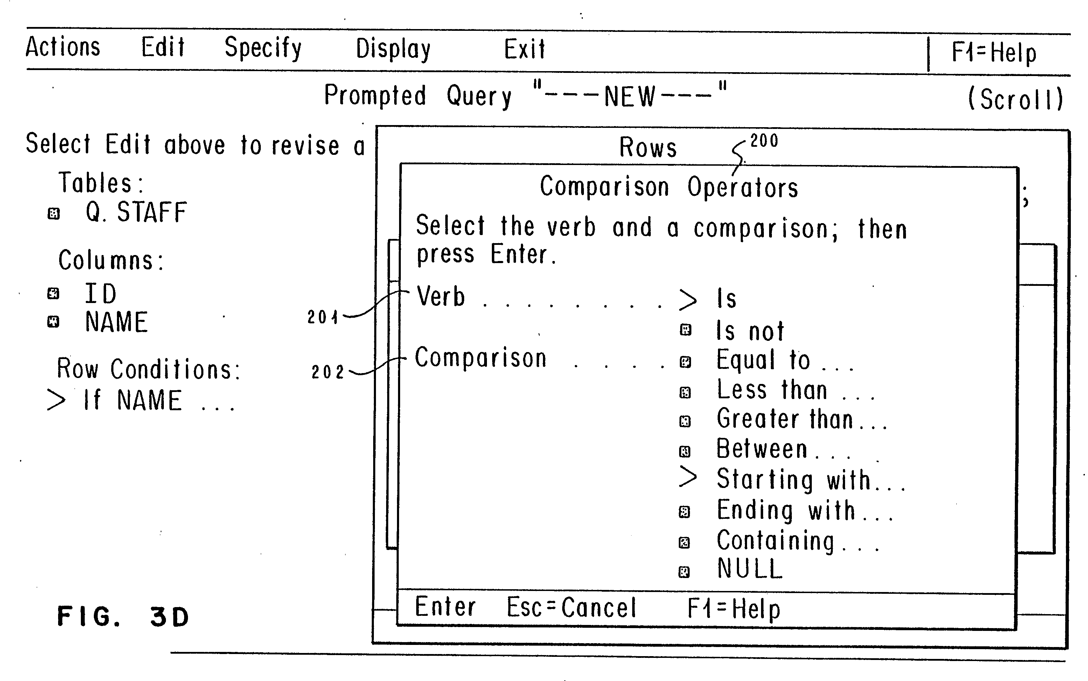

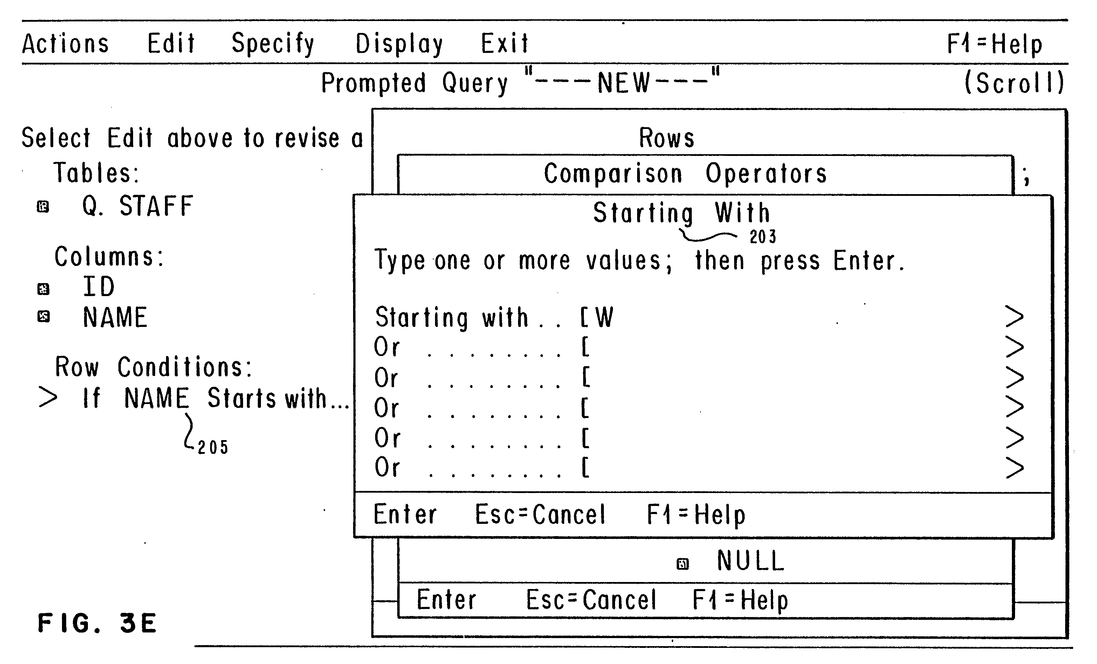

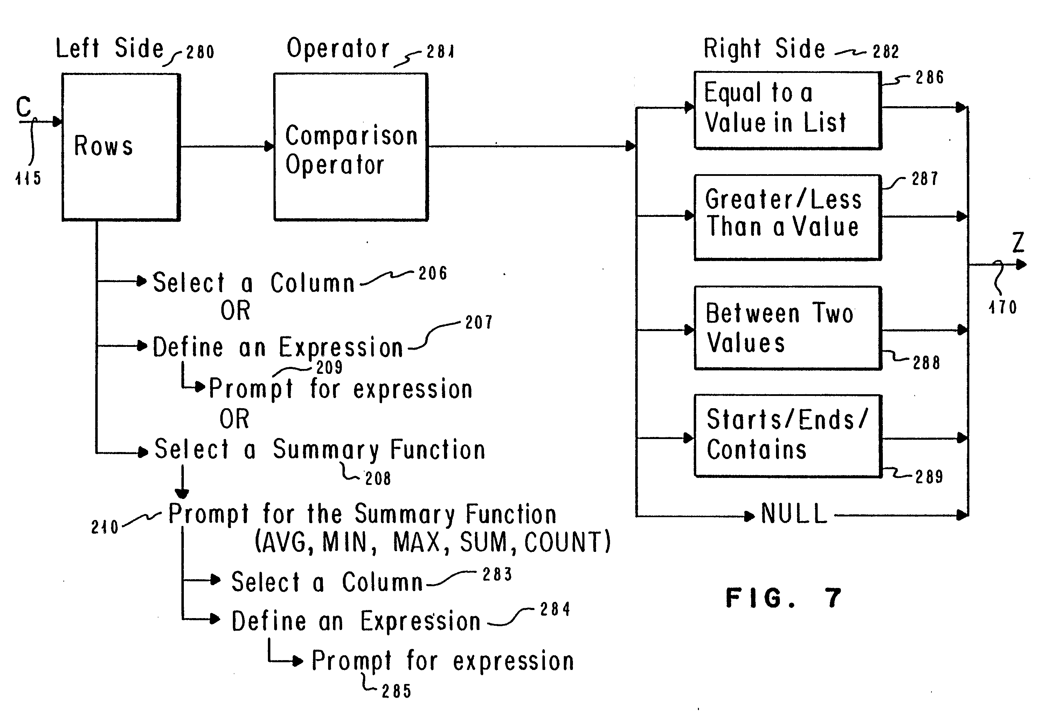

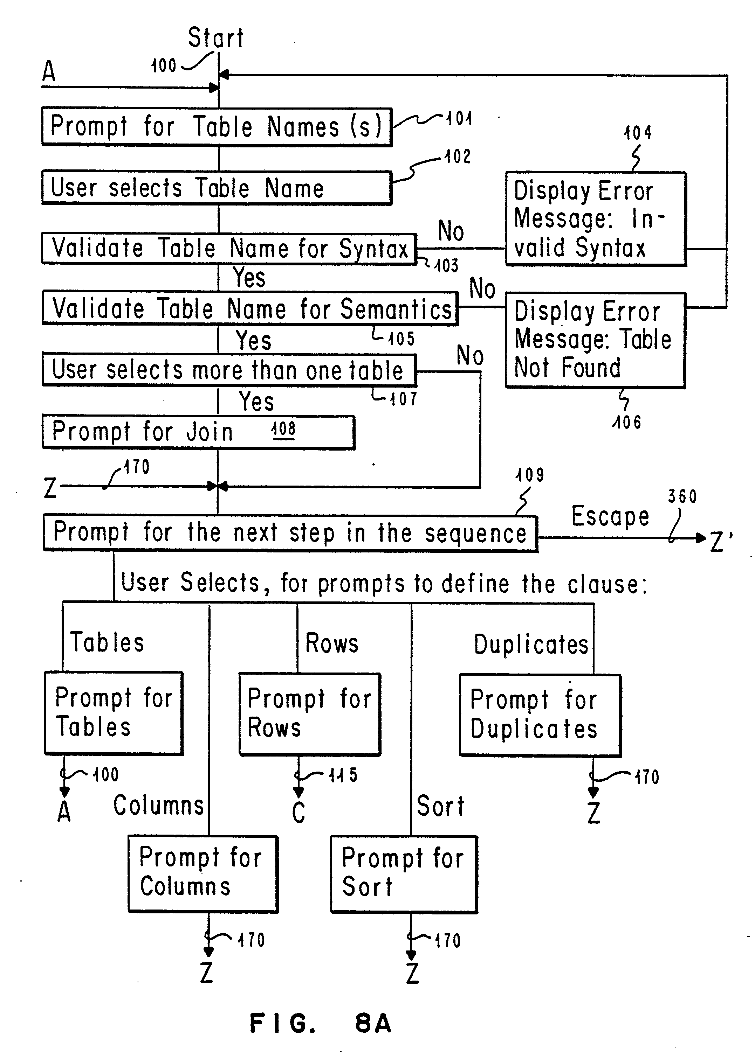

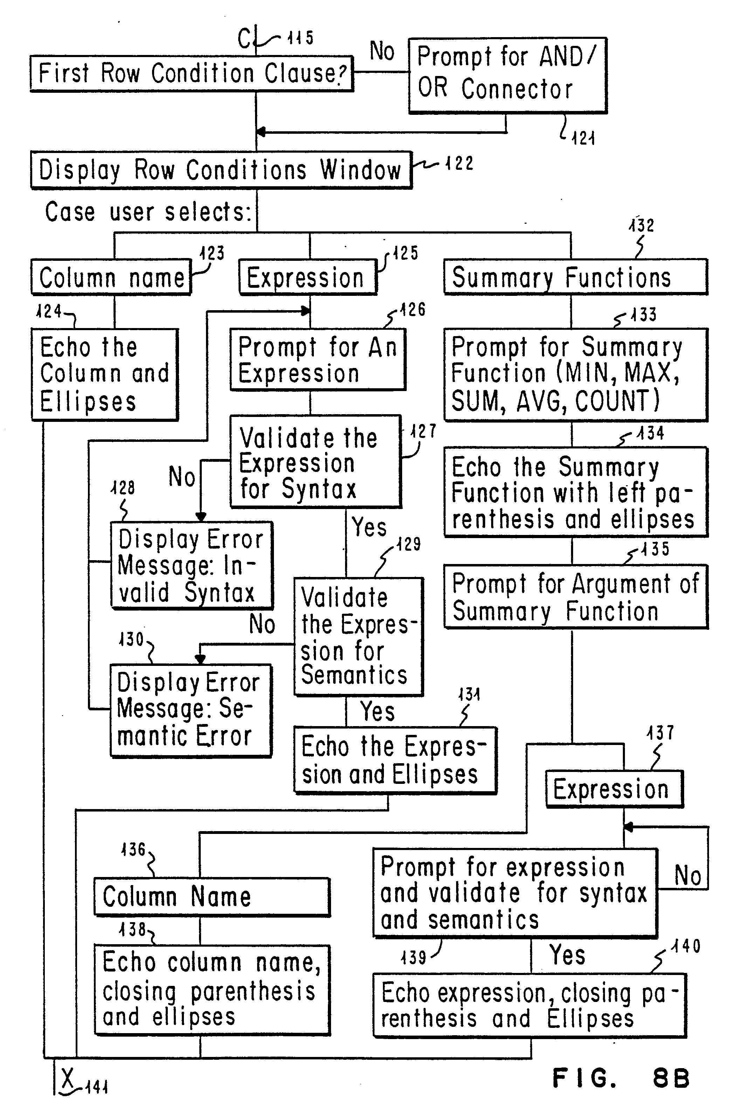

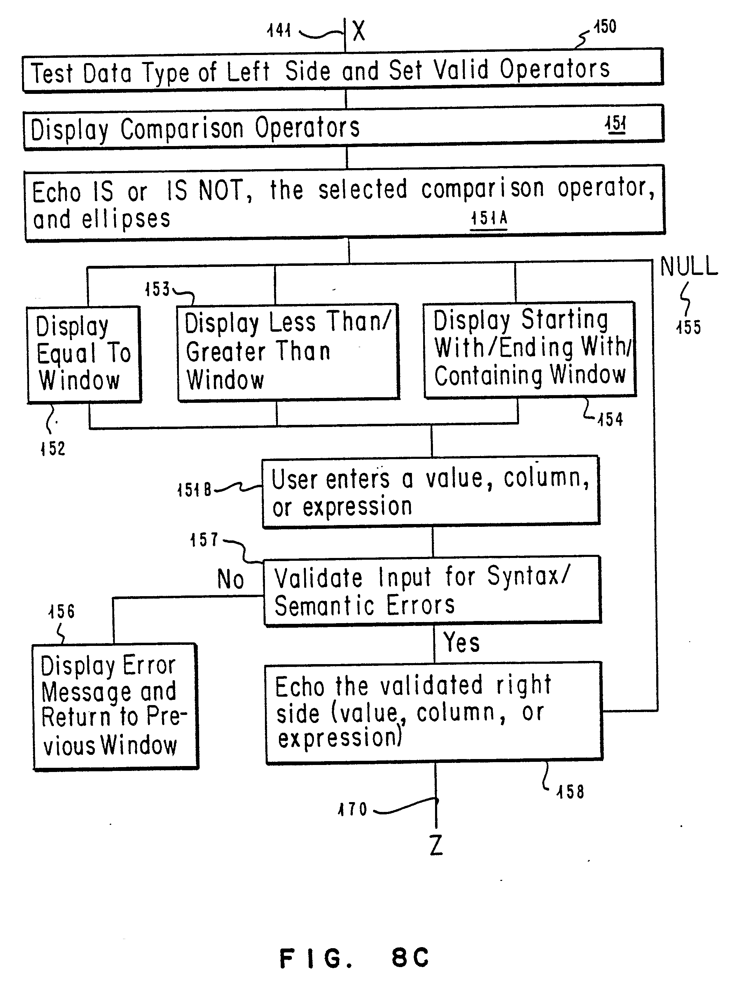

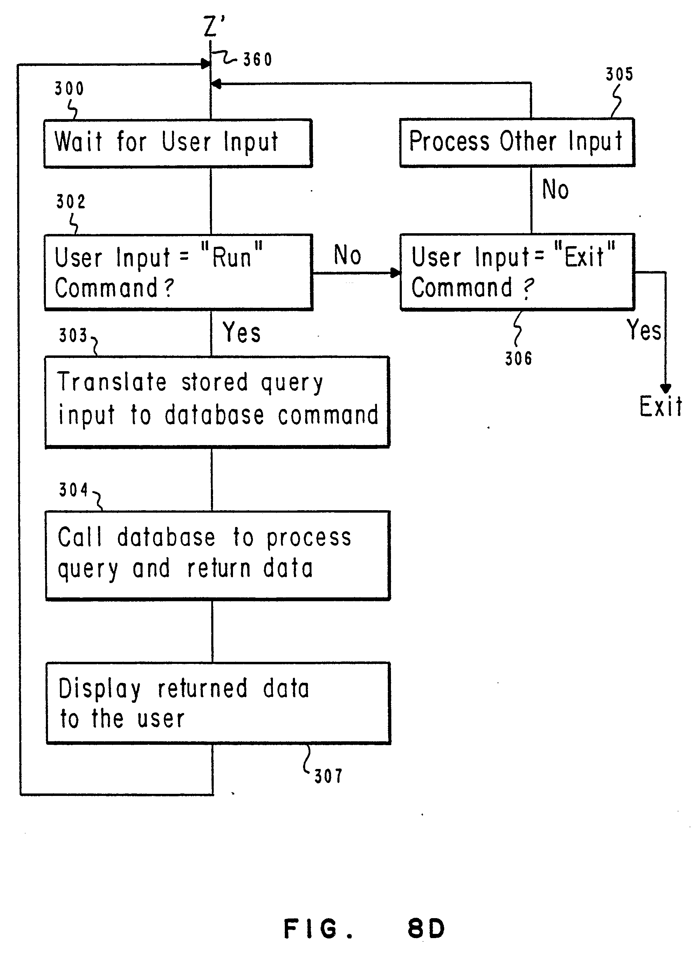

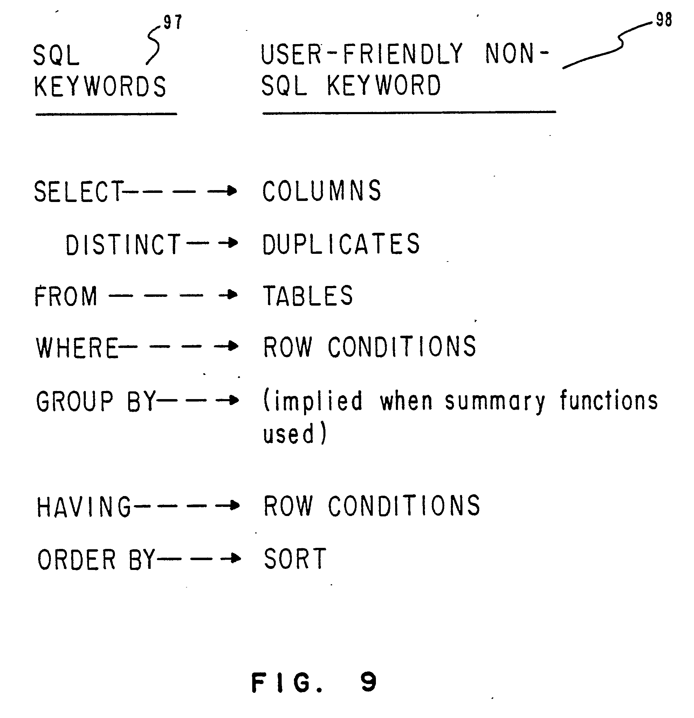

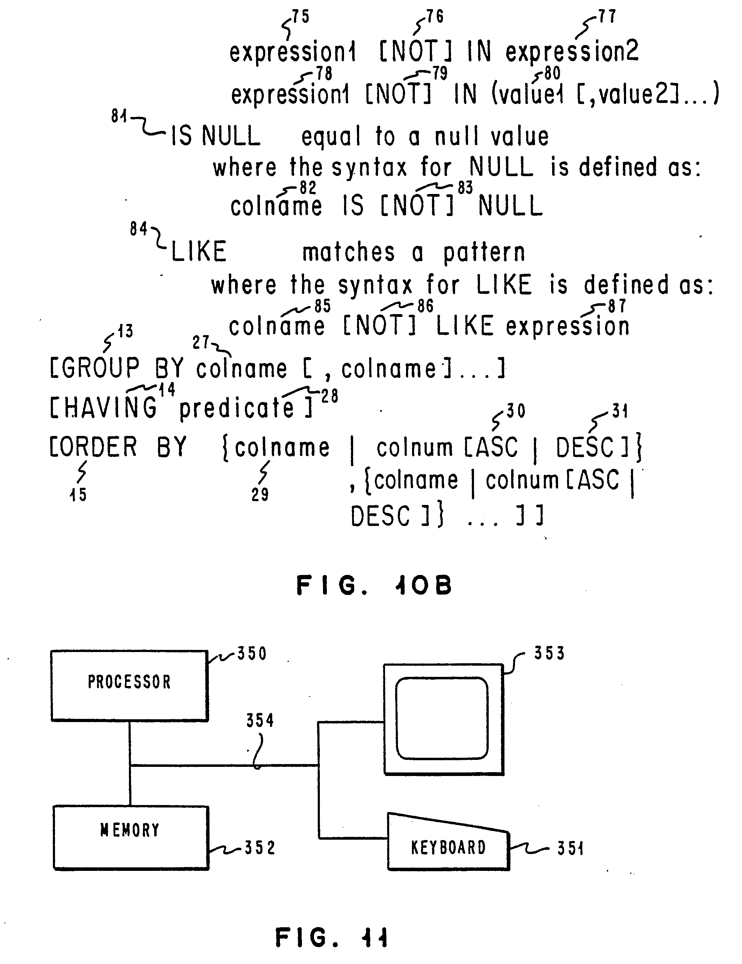

First, with reference to Figs. 1 and 2, an overall view will be given of the elements or clauses comprising a query statement. Next, several examples in Figs. 3-6 will be discussed which illustrate formulation of actual query statements as well as the resultant output data sets. This will then be followed by a discussion, with reference to Figs. 7-8, of a software procedure for prompting formulation of a database query according to the present invention. The procedure may be implemented in one embodiment with reference to the representative flow chart disclosed in Fig. 8. With references to Figs. 9-10, in order to more clearly appreciate the significant benefits of the query prompting system of the present invention over other conventional methods, a discussion will be provided in greater detail regarding alternative construction of a query statement by means of the SQL query language. Finally, apparatus according to the invention for generating queries will be discussed with reference to Fig. 11.

Fig. 2 is a pictorial view of a sequence of clauses 180-185 comprising a query, each of which may be sequentially defined by means of operator responses to user interface screen prompts in order to formulate a complete query statement. It will be recalled that the completed statement will be uniquely functionally related to the particular subset of data to be retrieved from the database and will operate as a command statement to which the database manager software program is responsive in retrieving the desired data.

As an example of performance of the steps schematically indicated in Fig. 2 to formulate a representative query, let it be assumed with reference to Fig. 1 that it is desired to retrieve from the Staff table

4

depicted therein a list of all individuals whose name commences with "W" and their corresponding employee i.d. number. Let it further be assumed that more than one table may exist in the database as, for example, a second table listing department numbers and locations. Inasmuch as the department number is common to both this latter table and the Staff table, data between the two tables may be interrelated as desired giving rise to the previously noted term "relational databases". Thus, for example, the location of an employee may be obtained by interrelating the two tables wherein the particular employee's department number may be determined from the Staff table of Fig. 1, and then by querying the second table for location of the department having this department number, the employee's location may be determined.

With continuing reference to Fig. 2, clause 180 is intended to indicate that, as a first step in structuring or formulating the desired query, it may be necessary to select more than one table from the database (as just described) and thence to join selected columns within the tables or the entirety of selected tables in a cartesian product as shown by clause 181. For simplicity in the example presently under discussion, however, such a joinder is not required in that all the necessary information to respond to the query appears in the Staff table of Fig. 1.

Proceeding to the "columns" clause definition, 182, it will be necessary to formulate an appropriate portion of a computer instruction comprising a query which will retrieve only the desired employee name and i.d. number columns from the Staff table of Fig. 1. However, if the query statement was limited only to such information, the entirety of the i.d. and name columns of Fig. 1 would be retrieved rather than limiting retrieval as desired to only those names and corresponding i.d.'s wherein the names fit the aforementioned criterion of beginning with a "W". Accordingly, the rows clause, 183, represents that portion of the completed query which, when executed, will delimit the number of names retrieved from the name column to only those fitting the prescribed condition, namely only those names commencing with the "W". Once the names retrieved from the name column have thus been parsed by the row condition specified by clause 183, it may be desired to have the remaining rows which met the row condition sorted in some fashion such as alphabetically or in ascending or descending numerical i.d. order. Thus, a sort clause, 184, portion of a complete query may be formulated.

Finally, in some instances, notwithstanding selected retrieval of only a subset of data comprising the database by reason of the operation of the previously described portions of the query statement, duplicate data fields may nevertheless be retrieved. If it is desired to eliminate such duplicate data outputs after the database is queried, a duplicates clause 95 of the completed query statement may be included to suppress retrieval of such duplicates. The breaks (//) 186 in Fig. 2 denote points on the prompting sequence wherein the user can either continue through or bypass the next step in a sequence. An example of this might be a query for all columns within a given table wherein limiting the rows, sorting, and eliminating duplicates may not be desired, in which case formulating clauses, 183-185, are unnecessary.

Figs. 3A-3E depict a series of actual computer terminal screen prompts to an operator which were generated by implementation of a software program of the present invention hereinafter discussed with reference to the flow diagrams of Figs. 7-8. Also depicted are proper operator responses thereto, resulting in formulation of a completed query statement to a database, the desired data output table of which is shown in Fig. 3F (i.e., the listing of employee names commencing with "W" and correlative i.d. numbers).

First, in Fig. 3A, the operator is prompted by means of a tables window, 187, for the name of tables in the database to be queried, whereupon the name of the Staff table is properly entered, reference numeral 188. In Fig. 3B, it will be noted that in accordance with the flow diagram of Fig. 2, the operator is then automatically prompted by means of columns window, 190, for information comprising the columns clause portion of a complete query statement whereby the number of columns and their functional makeup may be specified. It will be noted that in the columns window, 190, a scrollable list of available columns names 191 is provided for operator selection and that the operator has accordingly properly selected the column names I.D., 192, and NAME, 193. Operator response or selections will be hereinafter designated in the accompanying figures with a caret so as to not require further comment except as indicated. These column names 191 will be those of the table selected by clause 180 or a combination of columns of a plurality of tables joined by means of clause 181 of Fig. 2.

In addition to mere selection from tables of existing columns, provision is made for specifying new columns which may be mathematical functions of one or more existing columns as in the case of an expression 194 (such as salary + commission) or a summary function 195 (such as the average or minimum of a specified column). If the operator specifies that an expression 194 or summary function 195 type of column clause is to be defined, one or more separate prompt screens requiring operator response (to be discussed later but similar in function to those of Figs. 3A-3E) will be displayed.

Next, with reference to Fig. 3C, a rows prompting window 196 will automatically be displayed upon completion of the columns clause 182 of Fig. 2. This prompts operator response so as to define the desired row condition or clause 183 of Fig. 2 which restricts retrieval of rows in the NAME column only to those commencing with "W". Without the rows condition 183 portion of the query, all names and corresponding employee i.d.'s would accordingly be retrieved as the selected columns from the staff table. Out of all such possible rows, it is of course desired to limit them whereby in order for names rows to remain in the parsed retrieved list (and their corresponding i.d. numbers) they must satisfy the following row condition:

"If the name is starting with W" (then

retrieve it and list it as data output).

From the foregoing it will be noted that a row condition or clause is comprised of three parts each separately underscored which may be clearly seen in Fig. 7. The first underscored part may be referred as to the first component or left side 280 of the row condition. The second singly underscored portion may be referred to as the second component or comparison operator 281, and the third underscored portion may be referred to as the third component or right side 282 of the row condition. It will further be noted that the second component is comprised of two subcomponents, namely the doubly underscored portion referred to as the comparison and the remainder or verb. Both may be collectively referred to as the comparison operator as noted.

Referring again to Figs. 3C-3E, in Fig. 3C the operator is being prompted by means of the column names 197 portion of the row condition window 196 to specify the first component or left side of the row condition (i.e., "If the name..."). As shown in Fig. 3C, the operator has correctly selected the "NAME" column name as designated by the caret, whereupon the second component of the row condition is automatically prompted for as shown by appearance of the comparison operator window 200 of Fig. 3D. In response to this prompt the operator has selected the appropriate verb 201 ("is") as well as the proper comparison 202 ("starting with...") so as to complete the second component of the row clause 183 of Fig. 2 for the desired query.

Finally, with respect to the Fig. 3E, upon completion of entry of the second component of the row condition, the operator is automatically prompted for completion of the row condition by providing an appropriate response to a request for information to complete the right side or third component of the row condition. Such prompting may be seen by the automatic appearance of the "starting with..." prompting window 203 upon the operator's completion of response to the comparison operator's window 200 of Fig. 3D. In Fig. 3E it will be noted that the operator has correctly input as a response to "starting with..." the correct right side condition "W", thereby completing the entire query statement (inasmuch as sorting and duplicates clauses 184 and 185 are not desired in the present example).

A complete query statement has thereby been formulated by an operator which, when executed by the computerised database manager, will result in the desired data output table shown in Fig. 3F. To put in perspective the ease with which query statements may be formulated by the system of the present invention in comparison to other methods, an equivalent query statement for this example in the SQL language is of the form

"SELECT ID, NAME FROM Q.STAFF WHERE NAME LIKE 'W%'".

This statement may be input directly by means of keyboard entry. However, it is readily apparent that in order to do so the operator must have knowledge of the required format of the statement particularly in terms of syntax and semantics.

A convenient feature of the system being described is that not only are appropriate subsequent prompting screens automatically presented for corresponding operator response to define each subsequent query clause, but the operator's responses are cumulatively echoed back on the left-hand side of each screen Fig. 3A-3E so as to provide a continuous record of where the operator is in construction of the query. Accordingly, once the correct Staff 188 response has been made to the tables window 187 (Fig. 3A), this response is echoed at 189 in the screen of Fig. 3B so as to show that the Staff table has been selected. (The echoed "Q" is merely a user i.d.) Similarly, upon correct selection of I.D. and NAME columns 192 and 193, respectively, in the columns window 190 of Fig. 3B, these column selections are automatically echoed on the left-hand side of the screen of Fig. 3C as indicated by reference numeral 204. In like manner, the proper first component and comparison operator or second component of the row condition clause may be seen echoed at reference numeral 205 in the screen of Fig. 3E after proper selection from the column names window 197 (Fig. 3C) and comparison operator window 200 (Fig. 3D).

Yet an additional aspect of the example of Fig. 3A-3E must be noted, namely that as with the specification of column names (Fig. 3B) from the tables, an expression 198 or summary function 199 (Fig. 3C) may be specified as a first component or left side condition of a row clause, although in the present example only the column name "NAME" was selected. Moreover, the third component or right side of a row clause condition need not be a single value such as the alpha character selected in Fig. 3E or a constant, but rather may be a complex expression as desired.

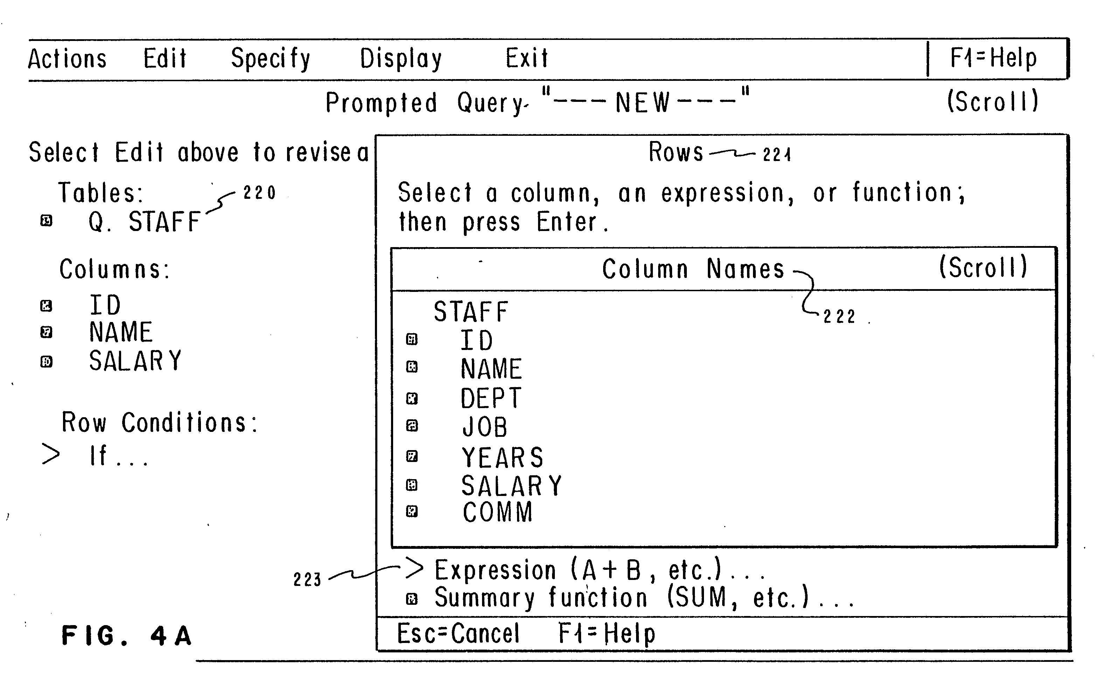

An example wherein an expression 198 may be desired as the first component of a row condition might be, in the present example, "salary + commission". In such a case it might be desired to retrieve from the Staff table of Fig. 1 a list of all names wherein this sum of two columns meets a specified condition (such as where the salary + commission might be greater than a constant, as will be hereinafter discussed in greater detail with reference to the example of Figs. 4A-E).

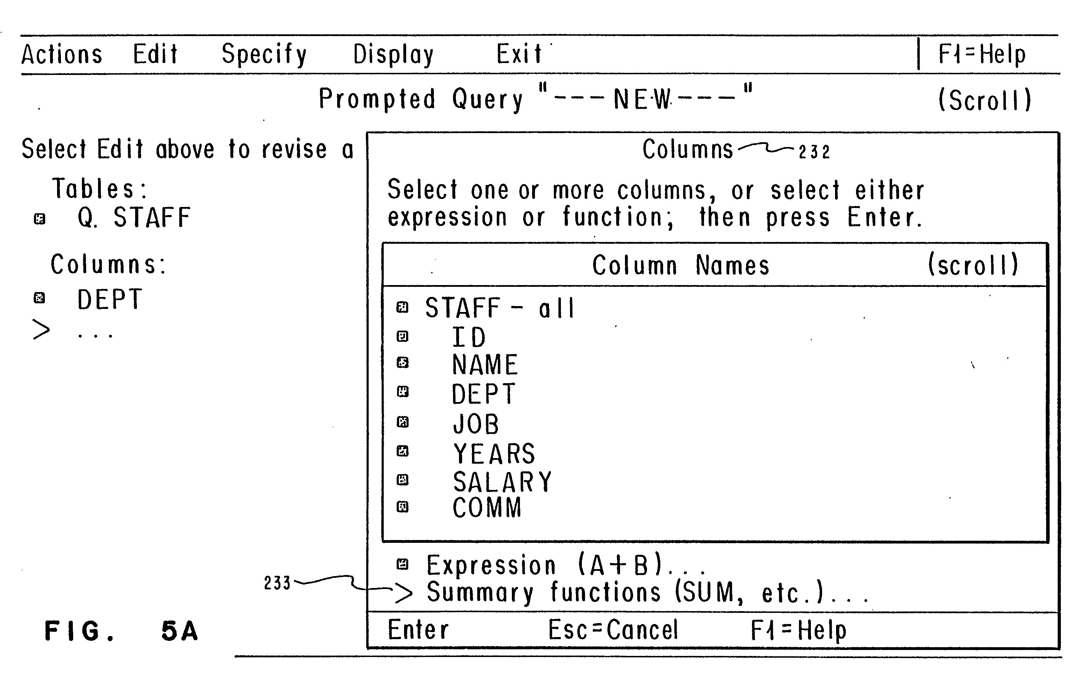

In like manner, an example wherein a summary function 199 (Fig. 3C) might be desired as a first component of a row condition or clause might be one in which it is desired to list minimum and maximum salaries in each department wherein the particular department's average salary must first meet some condition such as being less than a specified value. This latter situation will be described in greater detail with reference to Fig. 5A-H wherein the row condition to retrieve such data is "avg(salary) less than 18,000" and wherein it will be noted that the first component condition is complex and not merely a column name but rather a function of a column name.

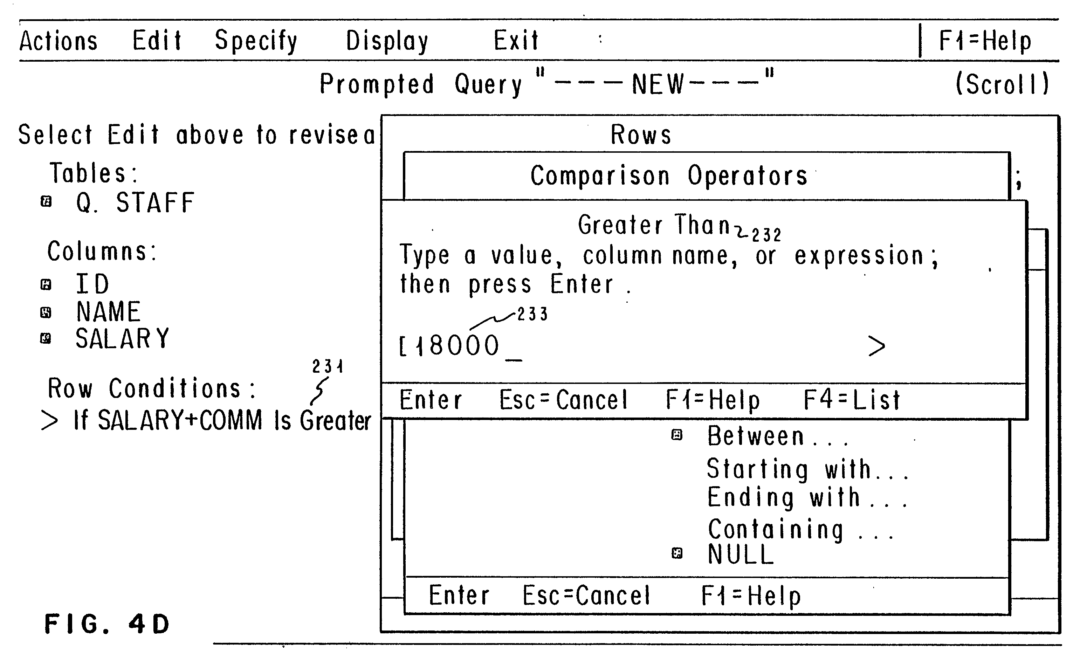

Although in the example of Fig. 3A-3F a simple column name and value are selected to specify the first and third components of the row condition, it is a feature of and contemplated by the invention that in a general case the first and/or third components of the row clause may be complex and thus may combine two or more columns or be functions of one or more columns wherein complex first and third components result. It is a feature of the invention to automatically make the operator aware of these possibilities by means of the prompt such as those at 198, 199 (Fig. 3C) or 232 (Fig. 4D).

Moreover, it is a further feature of the invention to automatically provide for one or more specific sequential prompt screens after the operator elects to define a complex function for the first or third components of a row condition as, for example, in the selection of the expression 198 or summary function 199 choices in the column names window 197 of Fig. 3C. These prompt screens will seek appropriate responses from the operator so as to assist in the definition of these complex row condition components without requiring of the operator syntax and semantic knowledge to construct these components correctly.

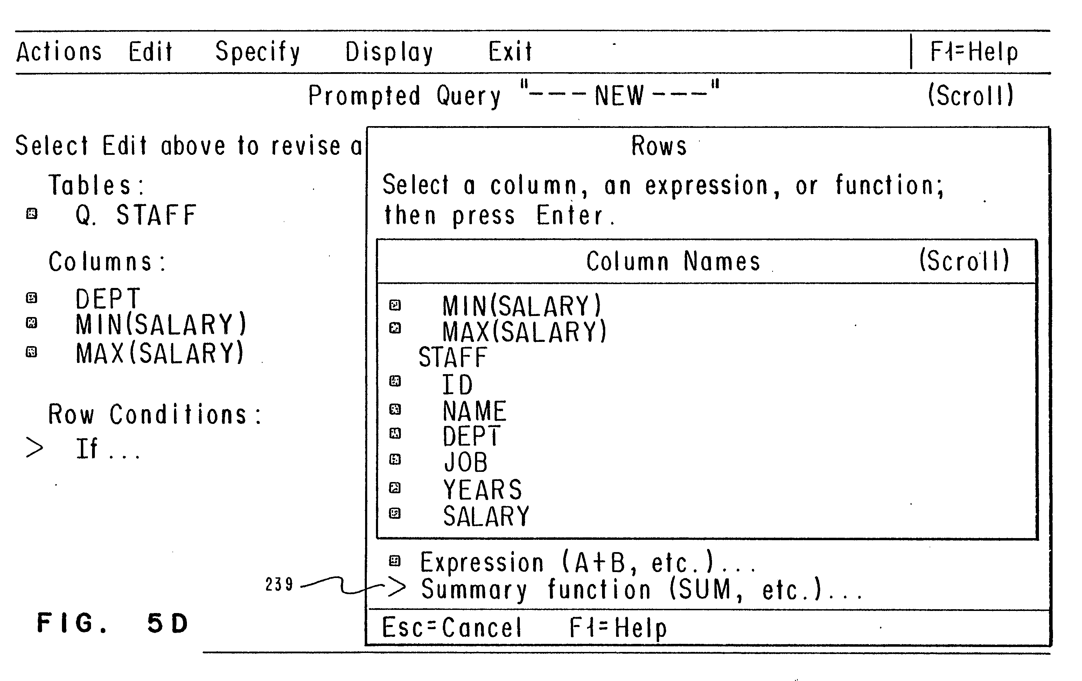

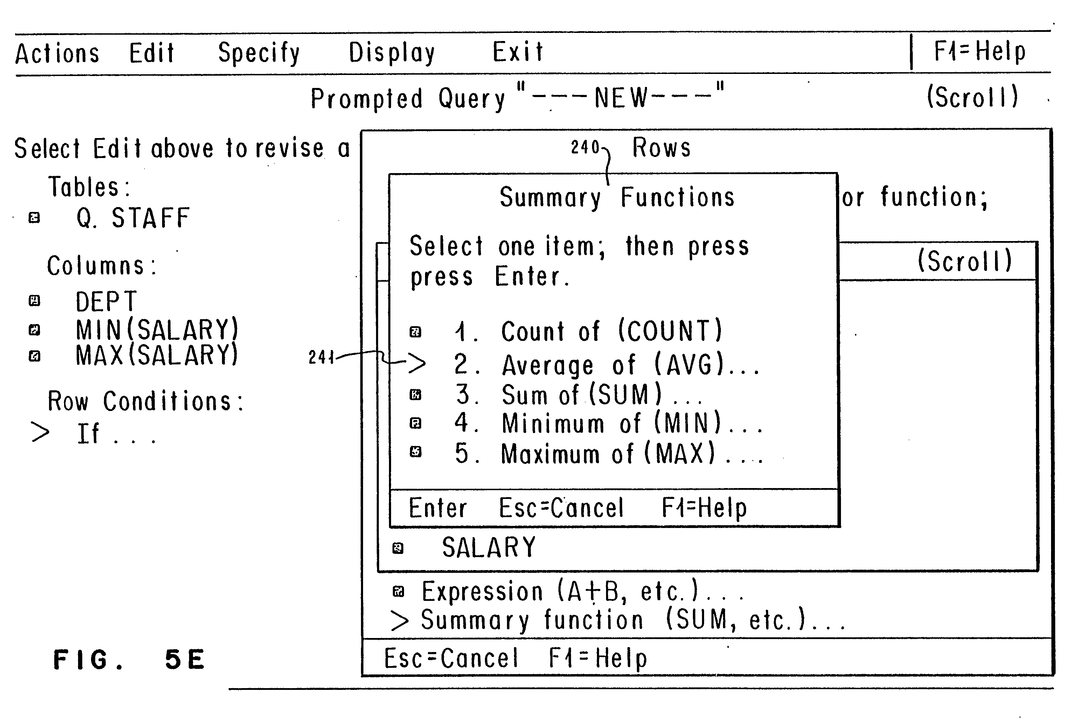

Fig. 7 provides an overall illustration of the sequence of steps in prompting for a row condition in accordance with the present invention, the details of which will be discussed with respect to the flow diagram of Figs. 8A-C. A series of steps and associated prompt screens and operator responses occur between location 115 (Fig. 8B) and location 170 (Fig. 8C) in the flow diagrams. The series of steps including prompt screens and responses for specifying a complex first component or left side 280 of the row clause (at 122, Fig. 8B) may be seen as the steps of selecting a column 206 (steps 123-141, Fig. 8B), defining an expression 207 (steps 125-141, Fig. 8B) which includes a screen prompt 209 for the expression (step 126, Fig. 8B), or selecting a summary function 208 (steps 132-141, Fig. 8B). The latter, as in the case of defining an expression, further includes prompting 210 (step 133, Fig. 8B) for the summary function and then defining the argument therefor (step 135, Fig. 8B) by selecting a column 283 (step 136, Fig. 8B) or defining an expression 284 in response to a prompt 285 for the expression (step 139, Fig. 8B). In Fig. 3C, a representative prompt screen may be seen for the left side row condition prompting the operator to select the column 206, define an expression 209, or select a summary function 208. Operator input to complete specification of the left side may also be seen in Fig. 3C. Representative prompt windows for defining an expression 207 may be seen in Figs. 4A-4B as well as the appropriate operator response to complete defining this left side of the row. In like manner, representative prompt screens may be seen in Figs. 5D-F for prompting an operator to select a summary function 208 as well as a proper operator responses thereto in order to complete defining this type of left side row condition.

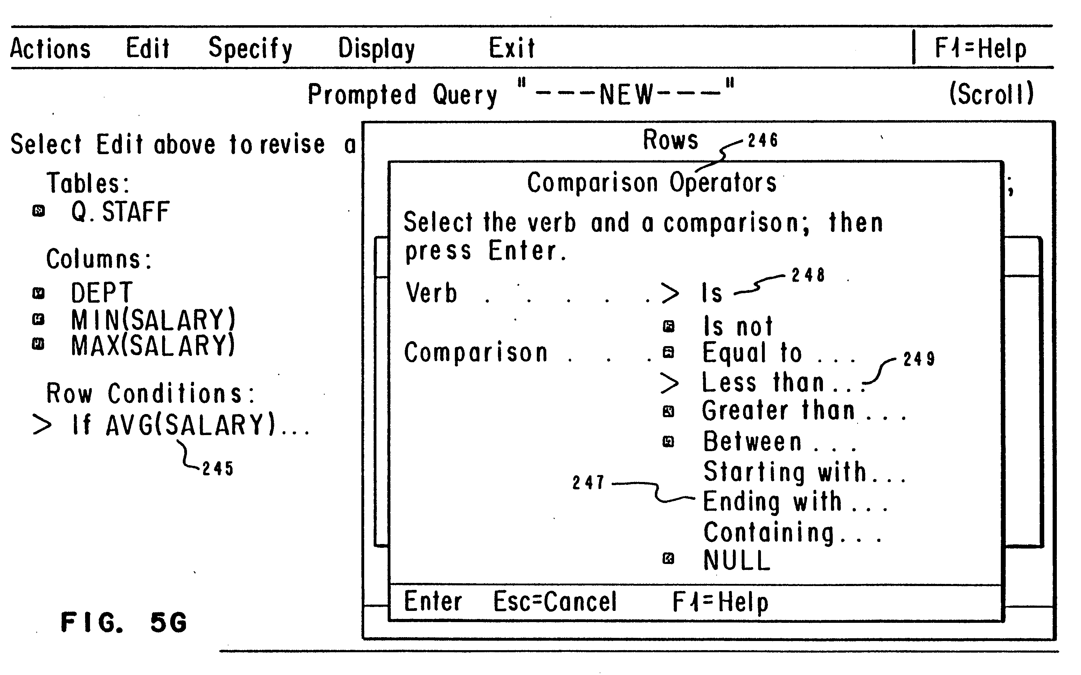

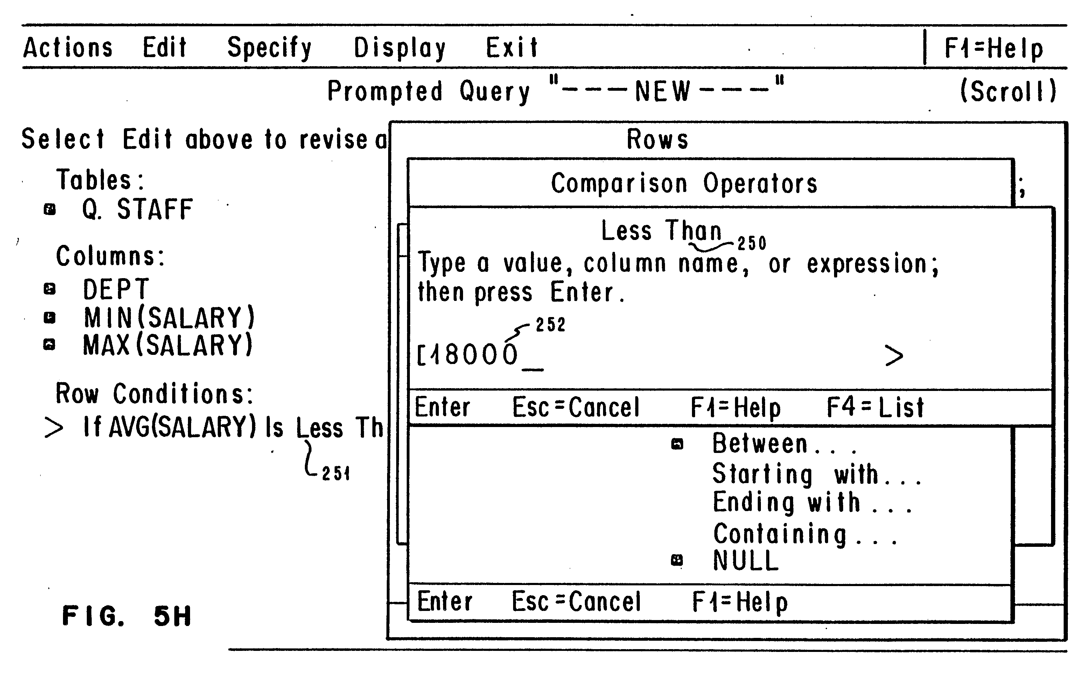

Still referring to Fig. 7, steps required to define the second component or comparison operator of a row clause may be seen schematically depicted therein generally at 281 corresponding to the more specific steps 151-151A represented in the software flow diagram of Fig. 8C. Representative prompt windows for an operator responses to conditions thereby specifying this second component of a row condition may be seen with reference to Figs. 3D-E (in the case of a left side column), Figs. 4C-D (for expression 207 specification), and Figs. 5G-H (for left side summary function 208 definition).

Finally, still referring to Fig. 7, the prompting steps and operator responses thereto in order to specify the right side of a row clause, corresponding to steps 151B, 156-158 of the software flow diagram of Fig. 8C) may be seen generally represented as reference numeral 282. Valid responses to prompts for the comparison operator 281 may include "Equal to", "Greater/less than", "Between two values", and

7

"Starts/ends/contains", as well as a null condition. Dependent upon which comparison operator is thereby specified in the prompt-response step 281 defining the second component of the row, a correlative one of the prompt-response steps 286, 287, 288, and 289 will be completed thereby specifying the right side 282 of the row clause and completing the clause in its entirety. A representative prompt window and response for this right side 282 completion may be seen in Fig. 3E (with respect to a left side column 206), Fig. 4D (for a left side expression 207), and Fig. 5H (for a left side summary function 208). Upon completion of the specification of the right side 282 of the row condition, the computerised prompted query program of the present invention will be at reference numeral 170 of Fig. 8C.

Figs. 4A-E illustrate a feature of the present invention just discussed wherein a complex first component of a row clause is prompted for. In this example, with reference to Fig. 1, it may be assumed that a manager desires to retrieve from the database of Fig. 1 a listing of all employees, employee i.d. numbers, and salaries but to limit this employee list to only those fulfilling the row clause condition that their salary + commission is greater than $18,000. The equivalent SQL select statement or search command is

"SELECT I.D., NAME, SALARY FROM Q.STAFF WHERE SALARY + COMM GREATER THAN 18000".

From the sequence of prompts and corresponding responses shown in Figs. 4A-4E, it will once again be understood how easily such a query statement may be prompted for without requiring the operator to know what the form in which the previously shown SQL statement must appear for proper execution by the database.

In Fig. 4A it will be noted that, similarly to the previously described example of Fig. 3A-E, the operator has already correctly input, in response to prior prompt screens for table and column selection, the appropriate table to query (Q.STAFF) as well as the desired columns (I.D., NAME, and SALARY). Also, as with the prior example, these selections have been echoed to the left side 220 of the prompt screen. However, a significant difference from the prior example may be noted in Fig. 4A, namely that when the row condition prompt window 221 appears, rather than simply selecting a listed column from the column name's window 222 as the left side or first component of the row condition, the operator has indicated at 223 that it is desired to specify a complex first component, namely an expression, (i.e., salary + commission). As has been previously noted, with prior systems for assisting the less-trained user to construct query statements, the user was not even made aware that it was possible to construct such complex first or third components of row conditions during specification of the row clause, but rather was lead to assume that only preselected and predefined items such as column names were available.

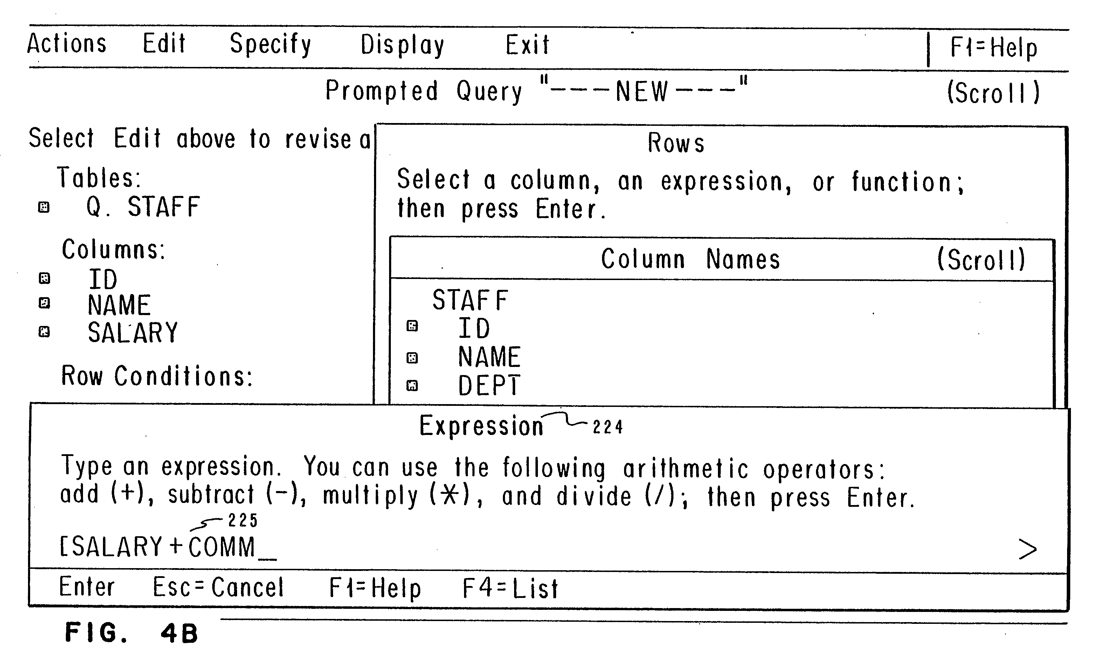

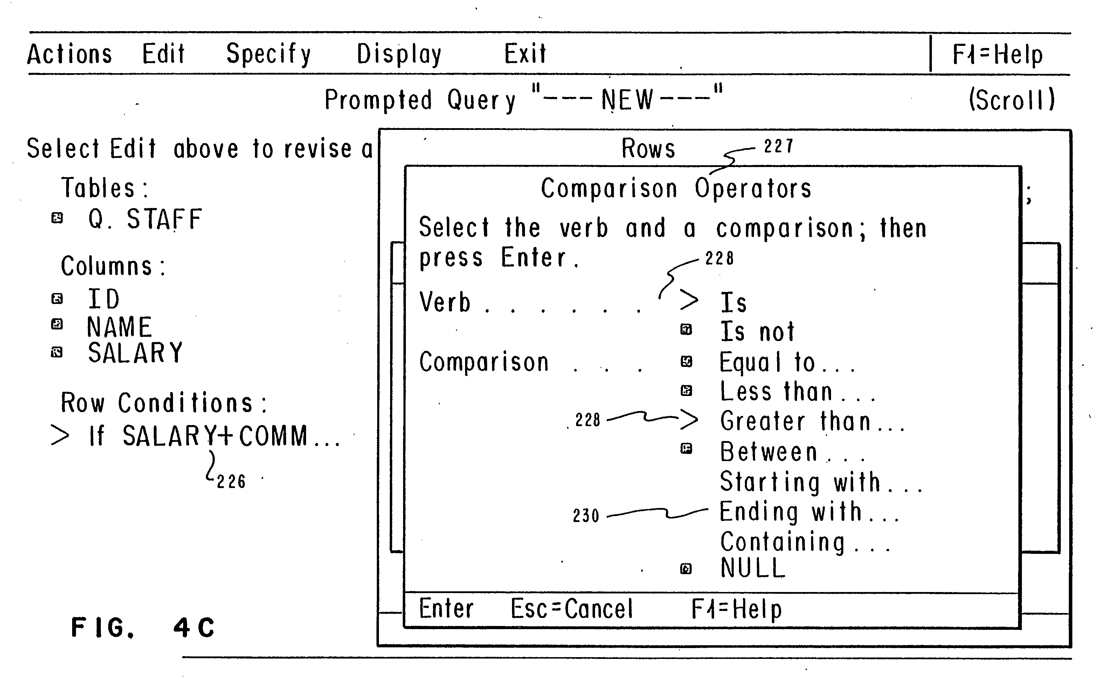

Referring to Fig. 4B, once the desire to specify a left side row expression has been entered, an expression window 224 prompt automatically appears prompting the user to input a desired complex expression. At reference numeral 225 the operator has accordingly correctly keyed in the desired first component of the row clause, namely SALARY + COMMISSION. Upon entering this expression, with reference to Fig. 4C the expression is echoed at 226 to the left side of the prompt screen and the selection of comparison operators appears in the comparison operator window 227 automatically. In response to prompting for the necessary syntactically and semantically correct responses to specify the second component or comparison operator for the row condition, it is evident at 228 and 229 that the operator has correctly selected the verb "Is" and comparison "Greater than", respectively.

Throughout this disclosure items appearing in windows which are valid and thus selectable are designated by a bullet or caret whereas those which may be syntactically or semantically invalid and thus not available for selection may nevertheless be displayed in the window. (Absent the bullet or caret of course.) However, if the operator attempts to select an invalid items, an error statement will appear requesting re-entry of another item. It is accordingly a feature of the invention to so limit the choice of items available for entry in an automatically appearing subsequent prompt window to only those which are syntactically and semantically valid as a function of a prior entry.

Thus, with reference to Fig. 4C, it will be noted that because the previously specified first component of the row condition was numeric in nature (i.e., salary and commission), comparison operators associated with alpha characters or strings such as "starting with", "ending with", "containing" at reference 230 are not valid comparison operators which may be entered as part of the query statement at this point (notwithstanding that the operator may nevertheless attempt to select such operators).

Referring to Fig. 4D, it will again be noted that the operator selections resulting from the previous comparison operator prompt window 227 (i.e., "Is greater than") is reflected at the left side of the prompt screen at location 231 and that a "Greater Than" prompt screen 232 thereby automatically appears to prompt the operator for completion of the row clause by specifying the third component or right side thereof. Once again, a feature of the present invention is thereby illustrated wherein in the specifying of a row clause, a prompt window will appear having contents functionally related to the nature of a prior response to a prior prompt window. In other words, when the operator indicated completion of a specification of the left side of the row condition by hitting an enter key or the like, the prompt window of Fig. 4C automatically appeared prompting the operator to specify the second component of the row clause.

Similarly, once the operator designated completion of the task of specifying the second component or comparison operator of the row clause, the "Greater Than" screen prompt 232 of Fig. 4D appeared which was selected for display as a function of the particular comparison operator selected in the comparison operator window 227 of Fig. 4C. By means of the "Greater Than" window 232, the operator is thereby prompted to recognise that the third component or right side of the row condition may be completed by entering a value, column name, or expression.

In the example under discussion, the operator has thus correctly entered the value 18000 at reference numeral 233, thereby completing formulation of the row clause.

If a different such comparison operator was selected from the comparison operator screen 227 (Fig. 4C), a correlative differing prompt window would appear in the screen of Fig. 4D prompting the user for inputs to complete a row condition uniquely associated with that particular comparison operator. An illustration of a different right side condition prompting window appearing in functional response to the particular comparison operator selected may be seen with reference to the previously described example of Fig. 3A-E, wherein in Fig. 3D in response to selection of the "Starting With" comparison operator, the Starting With prompt window 203 of Fig. 3E appears.

Once the complete query statement has thereby been defined by the operator by means of responses to the query windows of Figs. 4A-D, this formulated query statement may thence be executed by the database manager, resulting in the data output table shown in Fig. 4E. It should be apparent that the fields in the output table are a subset of the table of Fig. 1 satisfying the desired data retrieval condition associated with the query statement or search command, namely that a list was desired of all individuals, names, their i.d. numbers and salaries from the table wherein their salaries + commissions exceeded $18,000.

The series of prompt screens and corresponding operator responses shown in Figs. 5A-H illustrate yet another situation in which a complex component of a row clause query may be automatically prompted for. In the preceding example an expression was prompted for as a first component of the row condition, however, in the instant example it will be shown how a summary function may be prompted for .as a complex first component.

In this example, it will be assumed that it is desired to retrieve from the Staff table of Fig. 1 a list of departments from the staff with an indication of the minimum and maximum salaries of individuals within each department, and wherein the rows of the output table are further constrained to showing these department numbers, minimum, and maximum salaries only for such departments having an average salary less than $18,000. A typical complex query language statement such as that of SQL would accordingly take the form

"SELECT DEPT, MIN (SALARY) MAX (SALARY) FROM Q.STAFF GROUPED BY DEPT HAVING AVG (SALARY) LESS THAN 18000".

From a review of the prompt screens and responses associated with Figs. 5A-H, it will again be apparent how easy it is for an untrained operator to arrive at such a complex query statement without syntax and semantics knowledge simply by following the instructions of each prompt screen.

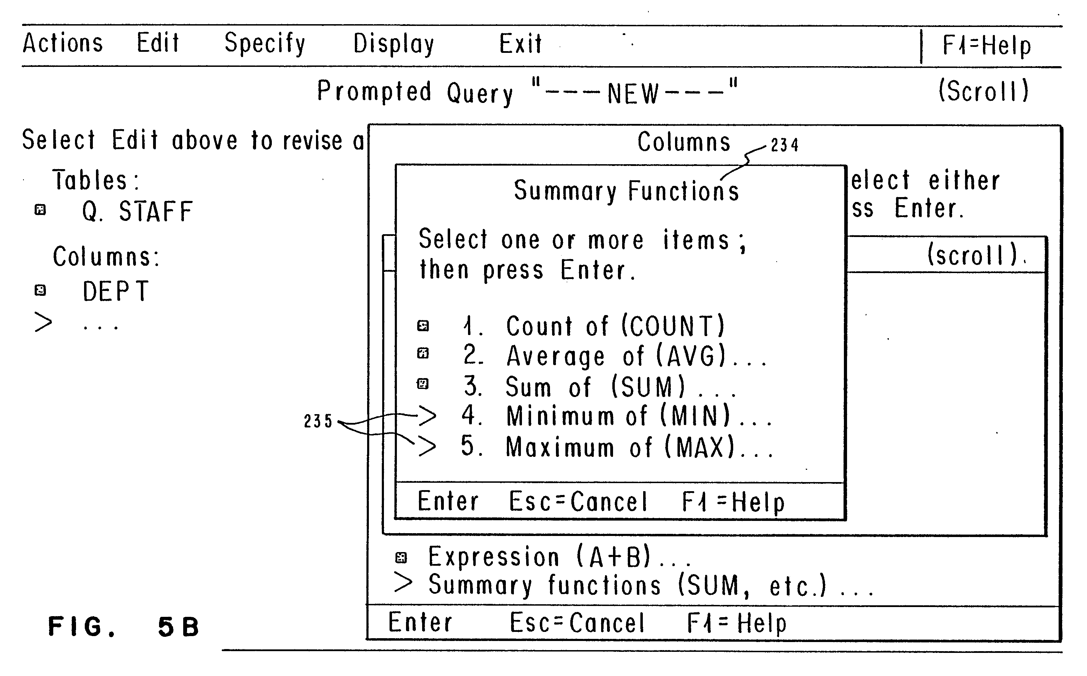

As with the case of the examples for Figs. 3A-E and 4A-D, a sequence of screen prompts will appear (not shown) for specifying the Staff table and the dept column out of the Staff table. The operator's appropriate responses to these prompts are reflected in the left hand side of the prompt screen shown in Fig. 5A. Inasmuch as additional columns are desired for output which are summary functions of columns, in the columns prompt window 232 the summary function 233 is selected by the operator in order to define summary function columns. Next referring to Fig. 5B, the Summary Functions .window prompt 234 will automatically appear due to selection of the Summary Functions feature at 233 in Fig. 5A. In Fig. 5B, the operator has selected as Summary Function items the functions Minimum and Maximum shown at reference numeral 235.

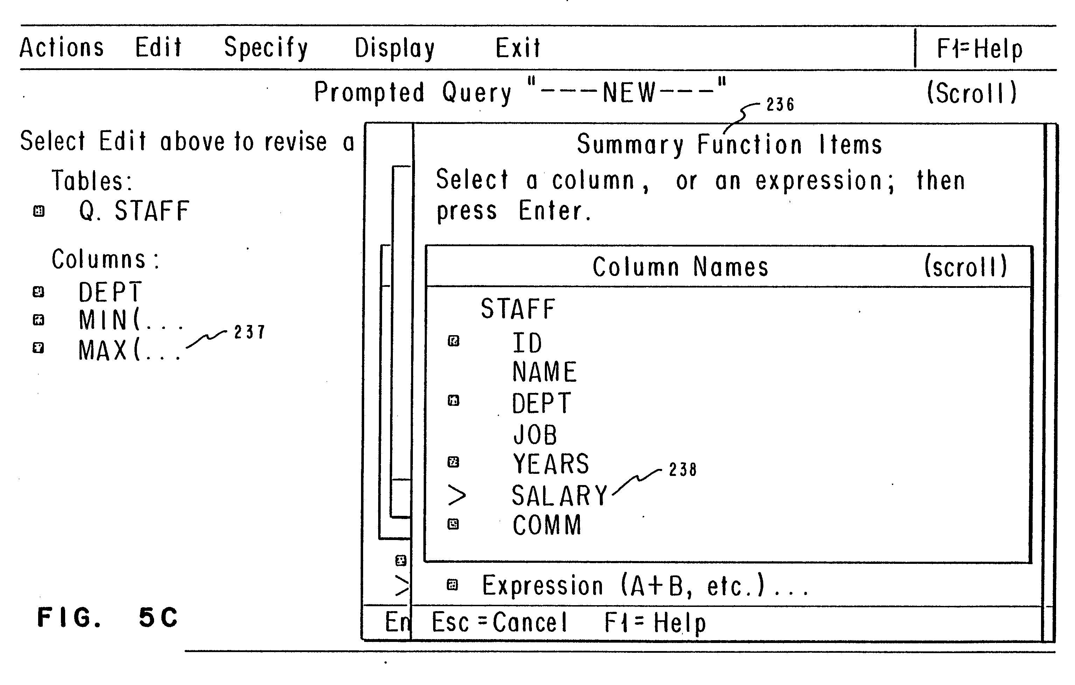

In Fig. 5C it will be noted that in response to operator selection of these Minimum and Maximum functions 235, a Summary Function Items prompt window 236 will appear prompting the operator to select a column or expression as an argument of the selected Min and Max summary functions (which have, consistent with prior echoes, then echoed to the left side of the prompt window at 237). The operator has selected "Salary" at 238 as the argument for the Min and Max functions 237 as shown in Fig. 5C.

Figs. 5D-H depict the sequence of prompt windows and correlative operator responses so as to define the complex first component of the row condition wherein "AVG(salary) is less than 18000". The function of this row clause is to cause the retrieval from the database of department numbers and the minimum and maximum salary within each department, but only for such departments meeting the row condition criteria that the department must have an average salary of employees within the department of less than $18,000. Again, it will be recalled that without the prompt window sequence for summary functions (in like manner to the prompt sequence for an expression in the example of Fig. 4), the operator frequently would have no way of knowing (without knowledge of a complex query language) that more complex queries having complex row conditions could be made. Rather, the operator would assume that for example the left side conditions of a row condition would be limited only to those columns previously specified during construction of a columns clause of a query statement. Moreover, even if such an operator was aware that complex first and third components of a row clause could be used to obtain more sophisticated database queries and resultant data output tables, without the prompt window sequences of the present invention an operator without knowledge of the particular complex query language would not know how to formulate such components.

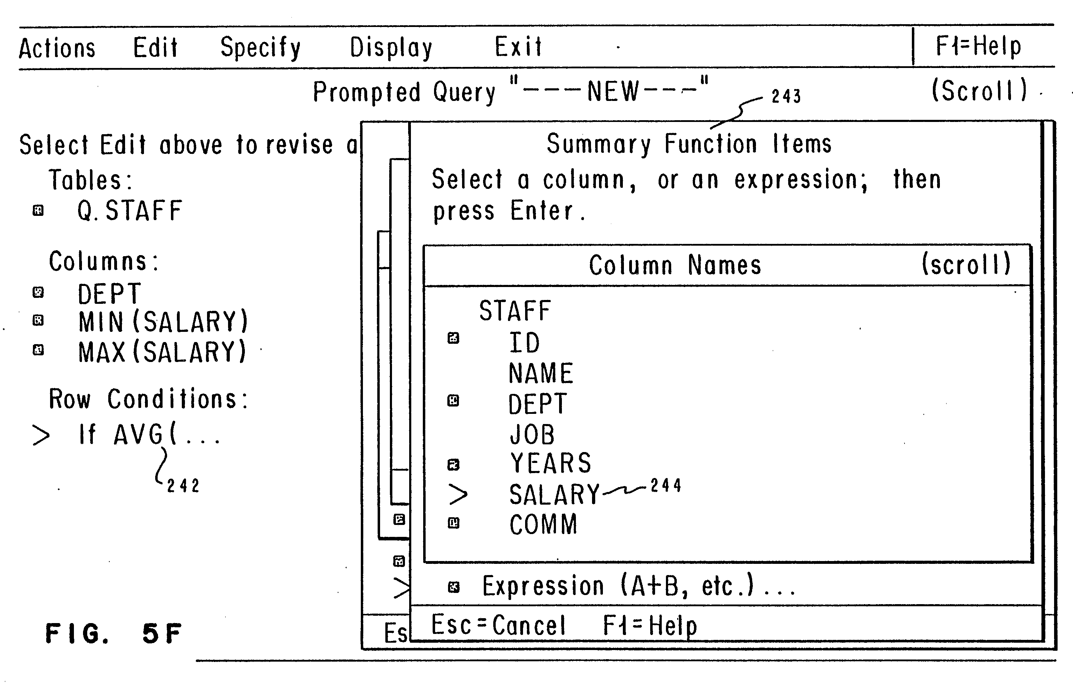

Returning to Fig. 5D, when the operator has provided an indication 239 that a summary function is desired as a left side row condition, the summary functions prompt window 240 automatically appears (Fig. 5E) wherein the operator has selected the AVG function as shown by the caret 241. In Fig. 5F, upon selection of the AVG function (echoed at 242), the Summary Function Items prompt window 243 automatically appears prompting the operator for an argument for the AVG summary function (which may be either a column or an expression as indicated in the window 243). Again, without such prompting, in addition to not knowing that a summary function or expression might be available as a left side row condition, the operator would further not know that the argument of a summary function might, in addition to a column, equally as well be an expression which might be defined during the specification of the complete row clause.

After the operator has selected Salary 244 in a prompt window of Fig. 5F as the argument to the AVG 242 summary function item, this argument is echoed at 245 in the prompt window of Fig. 5G and the Comparison Operator's prompt window 246 automatically appears. As with the prior examples, this Comparison Operator window 246 will prompt the operator for selection of one of a plurality of displayed available operator choices, permitting selection of only syntactically valid ones designated by the bullets. For example, if the operator sought to select the operator "Ending with" 247 an error flag would be displayed requesting selection of another operator. The reason for this is that the "Ending with" operator 247 is syntactically compatible with character data and not numeric data such as the mathematical function AVG.

Still referring to Fig. 5G, when the operator has responded to the Comparison Operator's window 246 by selecting the appropriate verb "Is" 248 and comparison "Less Than" 249, the corresponding "Less Than" prompt window 250 automatically appears (Fig. 5H) requesting the operator for a response providing the third component or right hand side of the row clause to thereby complete it. The selection in Fig. 5G of "Less Than" is of course echoed at 251 in the prompt screen of Fig. 5H. It will further be noted in Fig. 5H that by reason of the "Less Than" comparison operator window 250, the operator is advised that the row condition right side may be either a column name or an expression and thus is not limited only to predefined columns appearing in a list. In the window 250 it is clear that in response to the prompt information contained in there the operator has correctly entered the right side condition 252 of 18000 which would then be echoed in the left side of the screen of Fig. 5H upon depressing the enter key, thereby completing the query statement. The data output table provided by a database manager upon execution of this completed query is shown in Fig. 5I.

In the specification of a complex first component of a row clause wherein a summary function is defined (as was the case in the preceding example with reference to Fig. 5A-H), the argument of the summary function may desirably be not simply a column name but rather a complex expression. As an illustration of this, again with reference to the Staff table of Fig. 1, it may be desirable to retrieve from such a table a subset of data which is a list of employee names and their departments, but to limit such reported names and departments to only those wherein the sum of the salary and commission for every employee in the department is between $20,000 and $40,000. This is to be contrasted with the prior example wherein the minimum and maximum salaries reported in the data output table for each department were limited to only those wherein the respective department had an average salary less than $18,000. In other words the distinction in the instant example is that the argument "salary + commission" to the summary function "sum" in this example is itself an expression whereas the argument "salary" of the summary function "avg" in the prior example was simply a column name selectable from the column names listed in the Summary Function Items window prompt 243 of Fig. 5F.

In the present example under consideration, the correlative complex language SQL query select statement would be of the form
"SELECT NAME, DEPT FROM Q.STAFF GROUP BY NAME, DEPT HAVING SUM (SALARY + COMM) BETWEEN 20,000 AND 40,000".

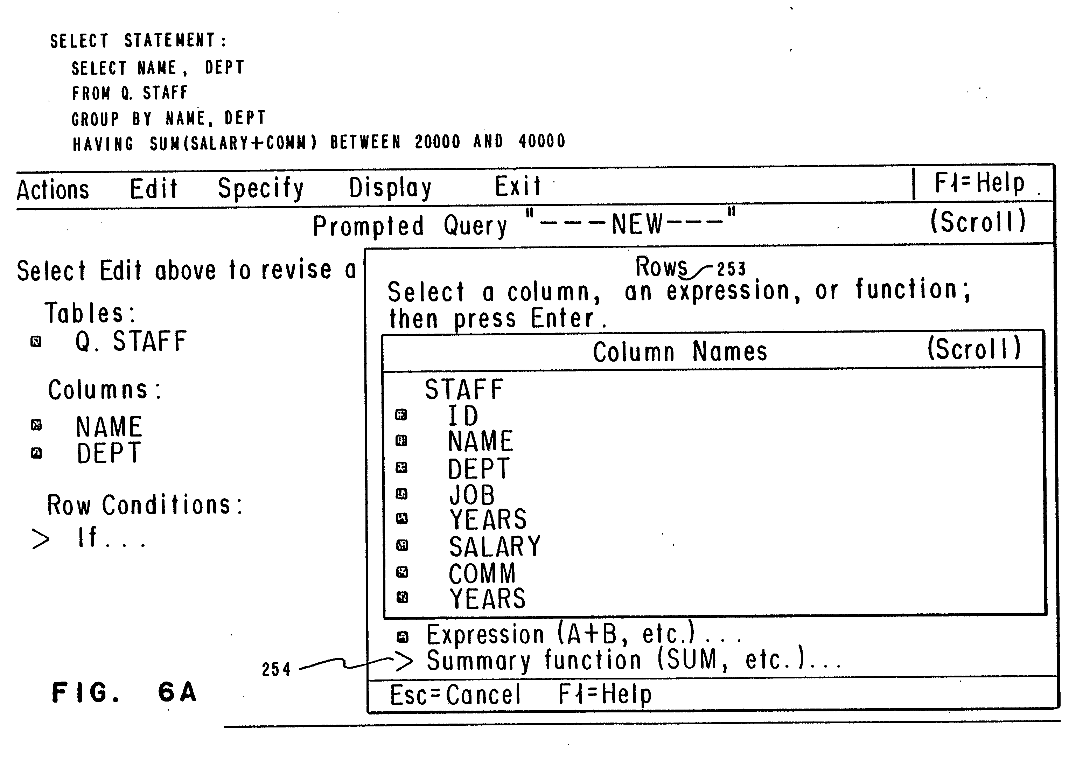

The window prompts and corresponding appropriate operator responses thereto to formulate an equivalent query statement in accordance with the present invention will now be discussed with reference to Figs. 6A-F. As shown at the left-hand side of the prompt window of Fig. 6A, the Staff table and column names "NAME" and "DEPT" have already been selected from prior prompt windows in a manner hereinbefore described with respect to the preceding examples. When the prompt for definition of a row clause thus automatically appears as Rows condition prompt window 253, the operator is thus made aware that the first component of the row clause may be a column, expression or function.

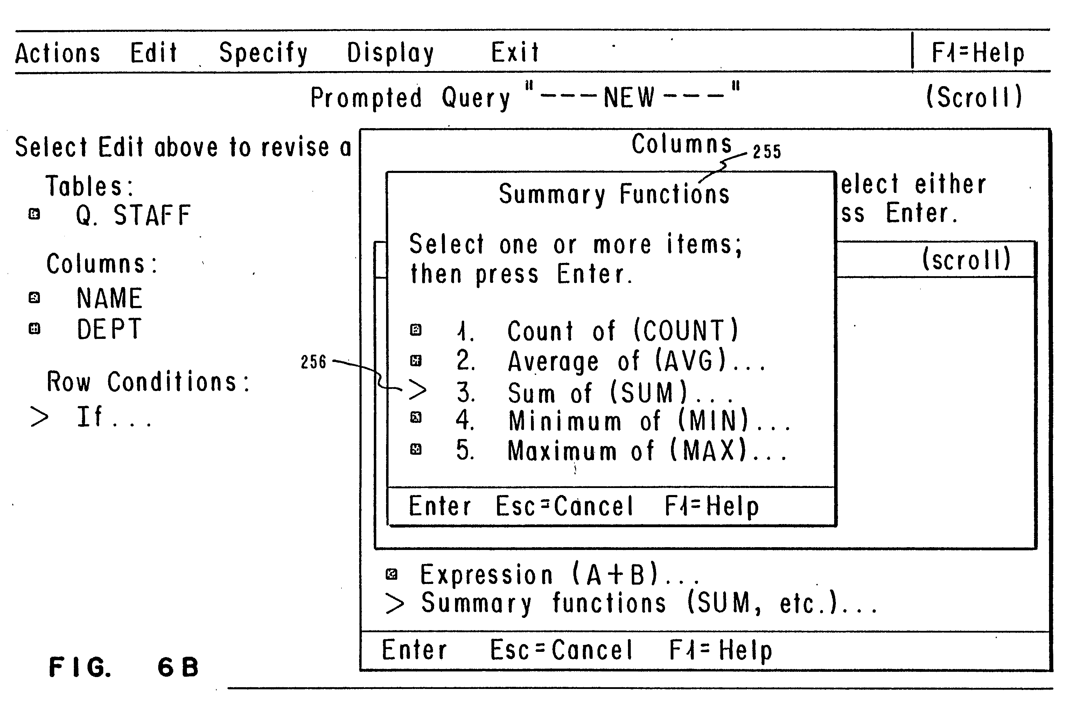

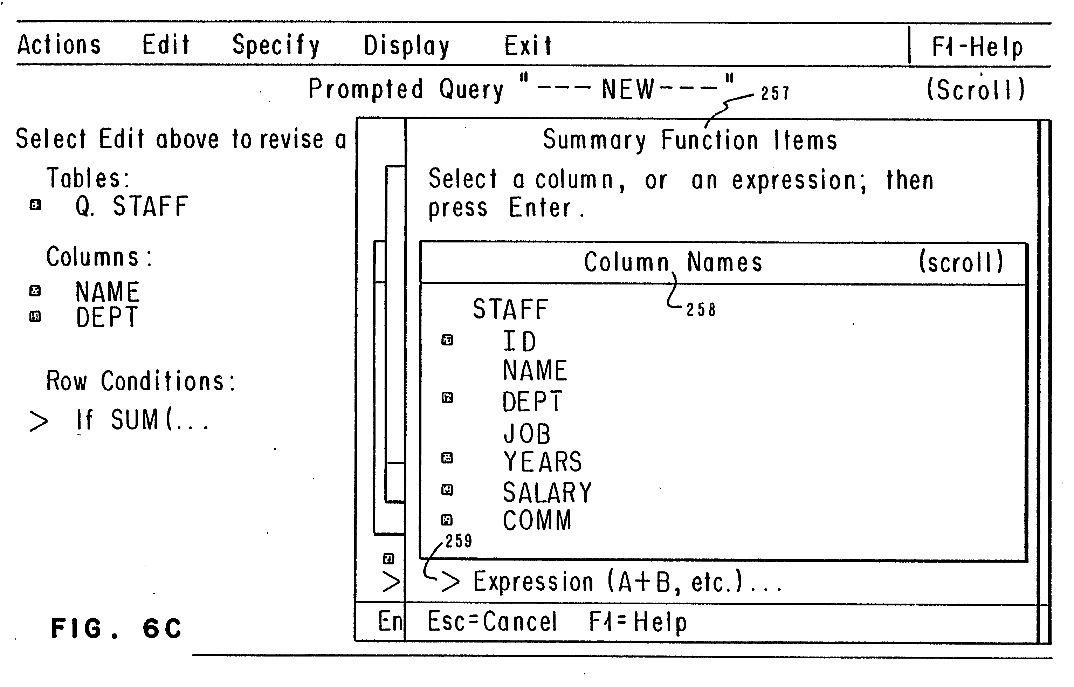

Upon designating desire to specify this first condition as a Summary Function indicated at 254, the summary functions prompt window 255 appears as shown in Fig. 6B. The operator has selected as the desired summary function "SUM", 256, whereupon the Summary Function Items prompt window 257 appears in the screen depicted in Fig. 6C. In this screen the operator is made aware that the argument of the previously selected summary function may thus be a column selected from the column names list 258 or an expression. As indicated by the caret at 259, the operator has correctly responded to this prompt by indicating that it is desired to specify a complex first component of the row condition, namely an expression for the left side row condition.

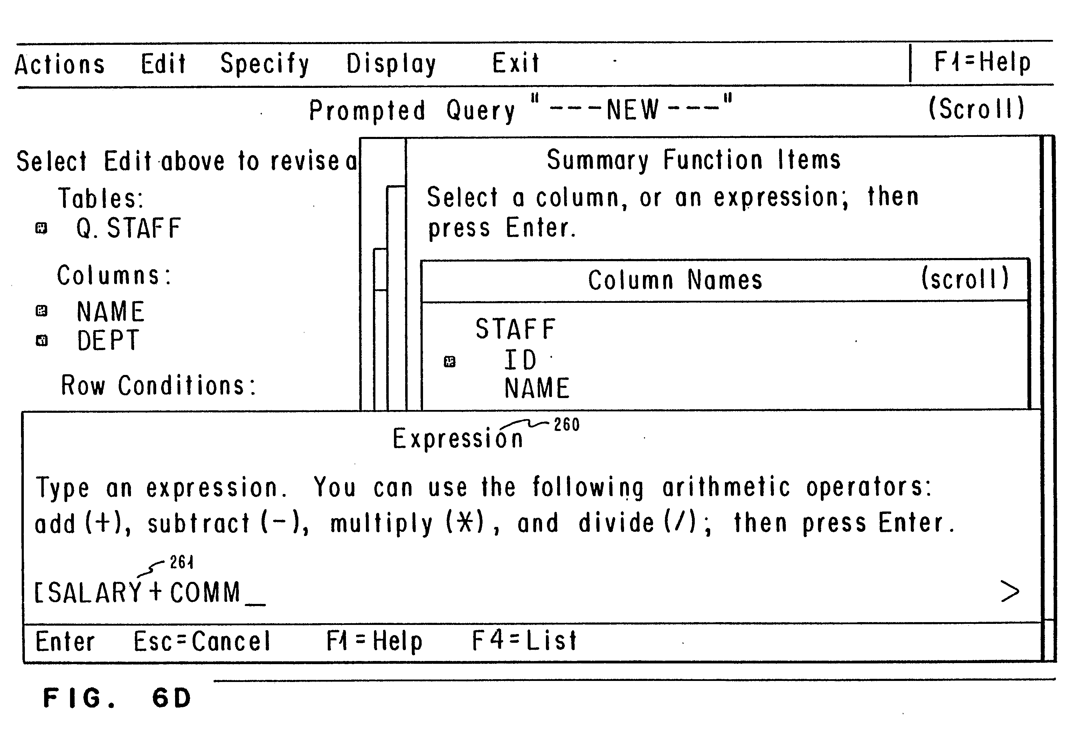

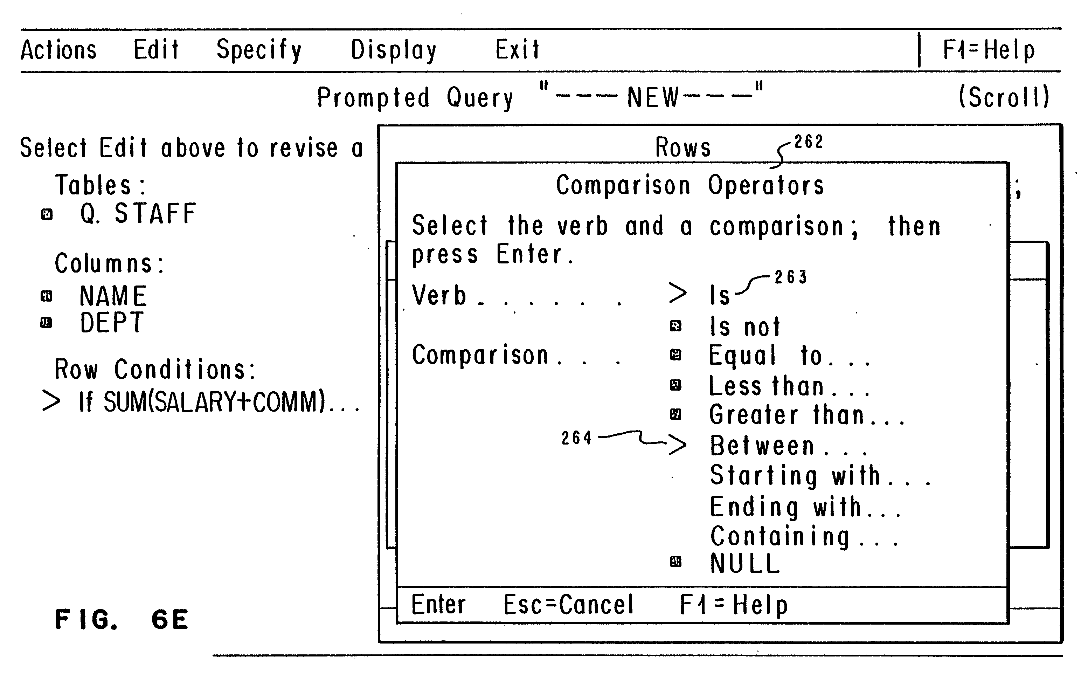

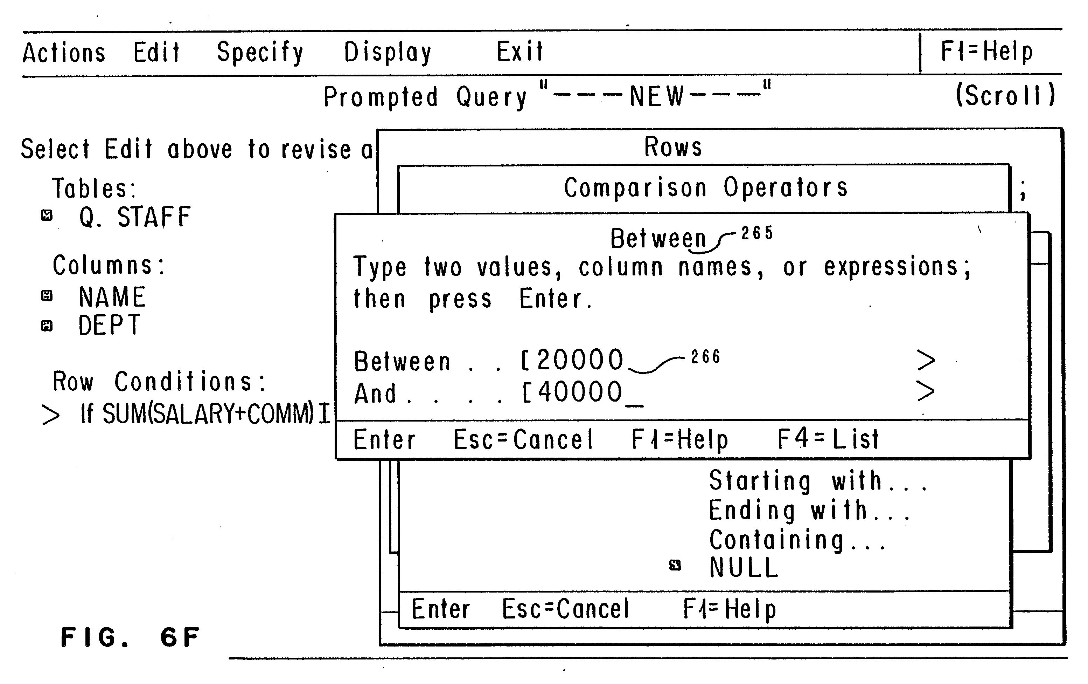

Upon such indication, the expression prompt window 260 automatically appears in Fig. 6D requesting a keyed input from the operator of an expression for the summary function argument. As shown at 261, the operator has thus appropriately keyed in the proper argument "SALARY + COMM". Upon completing inputting of the summary function argument, the second component of the row clause is automatically prompted for by means of the Comparison Operator's prompt window 262 automatically appearing in the prompt screen of Fig. 6E. In a manner consistent with the prior examples, the operator accordingly selects the appropriate verb "Is" 263 and comparison "Between" 264, thereby automatically resulting in appearance of the "Between" window prompt 265 (Fig. 6F). This prompts for appropriate response to define the third component of the row clause thereby completing the row clause and the entire query statement. As shown in Fig. 6F, the operator, in response to being advised to input two items required by the "Between" comparison operator and further being advised that such items may be comprised of values, column names, or expressions, the operator thus properly keys in the right side values 20000 and 40000 as shown by reference numeral 266, thereby completing the entire query statement. Upon execution of this query statement on the relational database, the resultant data output such as that shown in the form of the output table Fig 6G is produced.

With reference now to Figs. 8A-D, these figures illustrate in flow chart form the user interface software of the present invention which prompts the user to specify the clauses of a complex query statement requiring minimal syntax and semantic knowledge from the user of the particular complex query language.

In Fig. 8A, the program starts at step 100 and proceeds to step 101 to begin the dialogue for the task, i.e., to begin receiving the keyed-in user input information to determine the table names for the query to be defined. Step 101 displays the prompt for selection of the tables to query. If the user enters more than one table, the user is automatically prompted to join the table as shown in Figure 2 block 181 and steps 107-108 of Fig. 8A. The actual prompting of the Join condition is not discussed here in detail since neither it nor selection of multiple tables are requirements of this invention. In step 102, the user selects a table name and presses Enter to denote that the table name has been entered. Step 103 verifies the syntax of the table name is correct. If the syntax is not correct, an error message is displayed as shown in step 104 and the user is returned to step 101 to correct the table name. If the table name is syntactically correct, the application determines in step 105 if the table exists in the database. Non-existent table names cause an error message to be displayed as shown in step 106 and the user is returned to step 101 to correct the table name. If the table name is semantically correct, the application determines in step 107 if more than one table was selected.

When more than one table is selected, the user is automatically prompted to join the tables as shown in step 108. Otherwise, if only a single table is selected, the user is prompted for the next step in the sequence of steps as shown in step 109. Pressing the ESCAPE key at this time causes the prompting sequence to be terminated. If the user selects Tables as the next step, the user is taken through Tables prompting as shown in step 110 to define the Tables clause portion of the query statement. If the user selects Columns as the next step, the user is similarly taken through Columns prompting as shown in step 111. By selection of Rows as the next step, the user is taken through Rows prompting as shown in step 112 and further detailed in Figs. 7, 8B, and 8C. If the user selects Sort as the next step, the user is taken through Sort prompting as shown in step 113. Finally, if the user selects Duplicates as the next step, the user is taken through Duplicates prompting as shown in step 114.

Rows prompting has been disclosed in great detail with reference to Figs. 8A-D because many features of the invention may be seen therefrom. However it will be appreciated that similar detailed prompting steps would be provided for specifying tables, columns, sort, and duplicates clauses shown only generally at 110-114.

After the tables prompting sequence 110 is completed, the program will loop back to connector A at 100. However after completion of the prompting for columns 111, sort 113, and duplicates 114, the program will loop back to connector Z at 170. This is also true for rows prompting sequence 112. However because the flow diagram for this latter sequence has been expanded in Fig. 8B connector C at 115 (Fig. 8A) is shown connecting to the expanded flow diagram at Fig. 8B rather than connector Z. However connector Z is shown at the bottom of Fig. 8B indicating looping back to connector Z at 170 in Fig. 8A after completion of the more detailed description of the row prompt sequence.

When the user selects Rows prompting as shown in step 112, processing continues through connector C (reference numeral 115) to step 120 in Figure 8B. If this is the first row condition clause to be specified, the user is prompted with the Row conditions window as shown in step 122. If this is a complex predicate and the user has specified a row condition already, the user is prompted for a row connector first as shown in step 121. In other words, a row clause may actually be comprised of a joinder of two or more such clauses as, for example, in the illustration "If salary = $20,000 AND/OR COMMISSION = $500". From the Row conditions window as shown in step 122, the user can select as shown in Fig. 8B a column name, step 123, an expression, step 125, or a summary function, step 132 as the left side or first component of a row condition or clause. Steps defining this first component are from 123-140.

If the user selects a column name from step 123, the column name is echoed to the display followed by an ellipses as shown in step 124. If the user elects to define an expression at step 125, the user is prompted to enter an expression as shown in 126. When the user completes the expression and presses enter, the expression is validated for correct syntax as in step 127. If the user has entered a syntax error, a message is displayed as shown in step 128 and the user is returned to the expression prompting step 126 to correct the expression. However, if the expression is syntactically correct, the expression is validated for semantics as in step 129. If the user entered a semantic error (e.g., entered a column name that is not part of the table previously selected), a message is displayed as shown in step 130 and the user is returned to the expression prompting step 126 to correct the expression. Upon entry of a semantically correct expression, the expression is echoed to the display followed by an ellipses from step 131.

If the user selects a summary function at step 132, the user is first prompted to select one of the summary functions as in step 133. The user may select one or more summary functions at this time. If more than one summary function is selected, the same argument is used for each summary function selected. When the user selects the summary function(s), the summary function(s) are echoed to the display followed by a left parenthesis and an ellipses, step 134. The user is then prompted for the argument of the summary function, step 135. The user may select a column name as the argument, step 136, or define an expression as in step 137. If the user selects a column name, the column name is echoed to the display followed by a closing right parenthesis and then followed by an ellipses. If the user selects an expression, the user is prompted for the expression as shown in step 139. At this time, the expression is syntactically and semantically checked as in steps 127-130. If errors occur, error messages are displayed as in steps 128 and 130 and the user is returned to step 139. If the expression is valid however, the expression is echoed to the display by step 140 followed by a closing right parenthesis followed by an ellipses.

This completes the processing of the left side or first component of a row condition and processing now continues through connector X (reference numeral 141) to step 150 (Fig. 8C) where the left side of the row condition is checked to determine its data type. The valid indicators for the operators are set depending on the data type of the left side of the expression as shown in step 150. When the valid operators are determined, the comparison operators are displayed as shown in step 151. When a valid operator is selected, the selected operator is echoed to the display preceded by the verb IS or IS NOT depending on what the user selected from step 151A. The operator is then prompted for proper responses to specify the second component of the row clause. If the operator Equal to was selected, the Equal to window is displayed as shown in step 152. Selection of the Greater Than or Less Than operator causes the Less Than or Greater Than window to be displayed as shown in step 153. If the Starting With, Ending With, or Containing operator was selected, the Starting With, Ending With, or Containing window is displayed, step 154. When the user completes the entry of the third component of the row condition as in 151B, the input will be eventually validated for correct syntax and semantics as shown in step 157. If an error occurred as shown in step 156, an error message is displayed and the user is returned to the preceding window as shown in step 152, 153, or 154. If the input is correct, the right side or third component of the row condition prompted for is entered at 151B (a value, column or expression), and is then echoed to the display as in step 158. By selecting the NULL operator, step 155, processing also proceeds to step 158. Upon completion of the right side, the user is returned to step 109 in Fig. 8A through connector Z (170) of Fig. 8A for continued prompts and responses to define the next clause of the query.

Referring now to Fig. 8A when the user escapes or terminates from the prompting sequence at 360, the application waits for more user input as shown in step 300 of Fig. 8D. If the user input that follows is a RUN command as in step 302, the application translates the stored query information, i.e., the table names, column, row conditions, etc., into an equivalent SQL SELECT statement that can be processed by the database as shown in step 303. When the database processes the query, the results are returned from the database to the user as shown in step 304. The results may be shown to the user in the form of a Report with column headings above the columns of information returned 307. The application then loops back to 360 awaiting more user input. If the user input is not a RUN command, the application determines if an EXIT command has been issued as in step 306. If the command is Exit, the application is terminated. If another command has been issued, the command is processed as in step 305 and the application waits for further user input at 300.

Fig. 11 is a simplified schematic diagram of the computerised system of the present invention for generating search commands in the manner hereinbefore described. First, a processor 350 is provided which may be in the form of any number of CPU's in micro, mini, and mainframe computers currently available such as those contained in the conventional and familiar personal computer or "PC". A memory 352 is further provided. This memory stores the database manager program which includes the query prompting program hereinbefore described in greater with reference to Figs. 8A-8D. Additionally, memory 352 stores relational data such as that of Fig. 1 to be queried in accordance with the present invention as well as operator inputs keyed in by means of a keyboard 351. This user input data may include additional data inputs to the relational data stored in the memory 352, updating and editing commands therefor, as well as the various database search commands or queries which may be constructed in accordance with the invention as described herein.

A display screen 353 is further provided which may be of any design appropriate for the display of prompt screens such as those depicted in Figs. 3A-3E. The purpose of this display 353 is to enable the operator to view the various prompting screens generated by the present invention including the various instructions and valid response choices contained therein, as well as to provide a convenient means for viewing the various operator inputs keyed into the keyboard 351. Yet an additional purpose of the display 353 is to provide a visual indication of the data output tables such as that of Fig. 5I resulting from execution of the query formulated by the user in response to the prompted queries of the invention. Finally, with reference to Fig. 11 a conventional connection 354 provides electrical innerconnection between the processor 350, memory 352, keyboard 351, and display 353 so as to facilitate intercommunication between these components as required. The connection 354 is shown in a general schematic form. However it will be readily appreciated by those of skill in the art that portions of this innerconnection 354 may take the form of conventional data, control, and address lines, buses and the like.

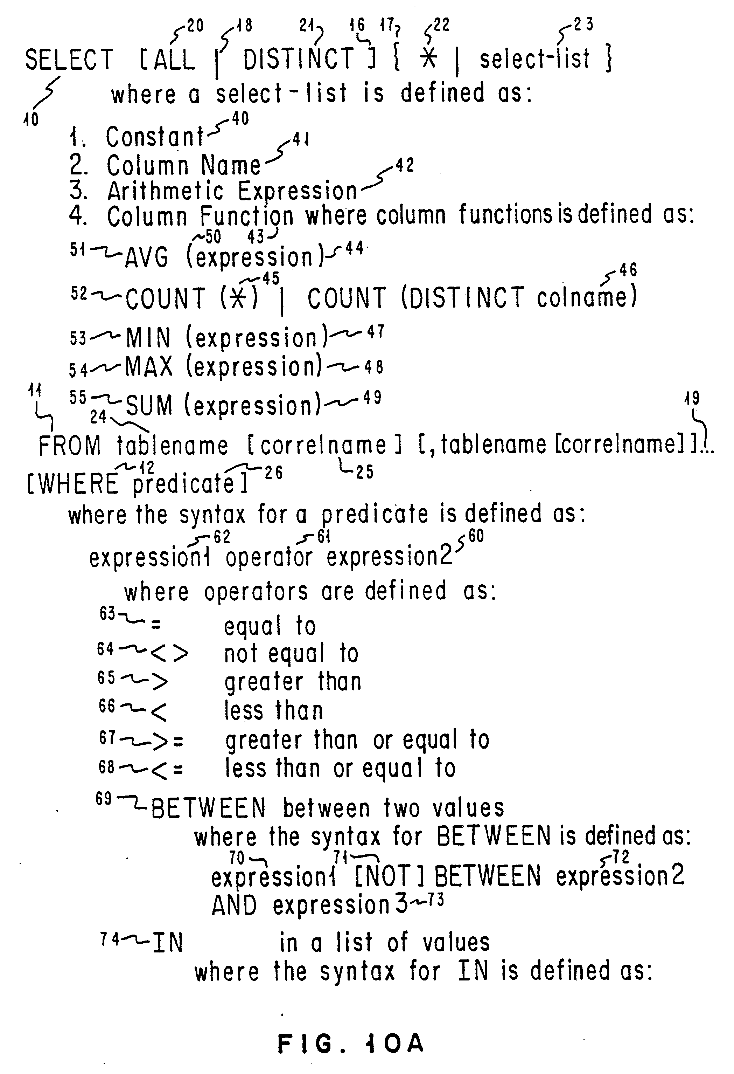

With reference to Fig. 10, in order to better appreciate the benefits of the present invention in simplifying formulation of queries by eliminating need for syntax and semantic knowledge, direct creation of complex language queries will now be discussed in greater detail using SQL as but one representative example. This is not intended to be an exhaustive discussion but rather only serves to illustrate the complexity involved in formulating directly such queries in the query language.

For the purposes of this invention, Figure 10 defines the elements of a complex statement, SELECT, as defined in the Structure Query Language (SQL). This statement defines the clauses that a user would need to know in order to construct a syntactically and semantically correct SQL SELECT statement. The SELECT statement is used to interface with a database manager for the purposes of retrieving specific data from the database.

Reference is now made to Figure 10 which shows the syntax for the SELECT statement. The SELECT statement is used to return a table of values to the end user. The SELECT statement may consists of up to 6 clauses each starting with the keyword or clause SELECT 10, FROM 11, WHERE 12, GROUP BY 13, HAVING 14, and ORDER BY 15.

With reference to Fig. 9, in the discussion which follows SQL clause keywords 97 will be used each of

13

which has a correlative and analogous non-SQL clause keyword 98 previously discussed with reference to Fig. 2 and the preceding discussion of the invention.

For the purposes of describing the syntax, the following statement convention has been used. Brackets 16 are used to denote optional items. Braces 17 are used when it is necessary to group items that are required. When there is a choice of keywords, the items will be separated by a vertical line 18. Ellipses 19 are used to indicate that an item can be repeated. The clauses 10, 11, 12, 13, 14, and 15 must be specified in the order shown if present.

The following describes each clause of the SELECT statement. As hereinbefore noted this description is not an exhaustive description of the syntax and semantics. The intent is to provide an insight into the complexity of the statement and the amount of syntax and semantic knowledge required by the end user without benefit of the invention.

The SELECT clause describes the fields to be returned in the output table. The output table is the table of values returned to the end user upon execution of the SELECT statement by the database manager. There are two parts to this clause. The first part 20 and 21 specifies whether identical rows are to be combined, and the second part 22 and 23 describes each field of the output. ALL (20) specifies that one output row is returned for each row of the final result table, without eliminating duplicate rows. DISTINCT 21 specifies that duplicate output rows are to be eliminated. The asterisk (*) 22 specifies that one field is returned for each column in the table definition specified by the FROM clause 11. This is a shorthand for writing out the list of column names. The select list 23 is a list that contain expressions. An expression specifies a single output field and can be a constant 40, a column name 41, an arithmetic expression 42, or a column function 43. Expressions are values derived by combining one or more fields or functions with arithmetic operators (+, -, *, /) and parentheses. The result is always a single value. Character strings cannot be combined in expressions. An example of an expression is SALARY + COMM. If the expression contains column names, the values are substituted for the selected row in determining the output field value for that row.

A constant 40 returns the same value for each row. A constant is a string of characters embedded in a statement string that represents a value. A constant may be a string constant or numeric constant. A string constant is enclosed in single quotes. Numeric constants include integer, decimal, and floating point numbers.

A column name 41 returns the value in the table column for the selected row. A column is a field that represents the value of one column of the current row of a table. An arithmetic expression 42 returns the value computed from the expression. A column function 43 returns a single value based on the function specified. The functions provided include AVG, COUNT, MIN, MAX, and SUM. The arguments of a function are enclosed in parentheses 50. The result of a function is derived by the application of the function to the specified arguments. Column functions provide a capability to return a value computed over values of the output rows. Thus it logically returns only one row of output for the SELECT statement.

AVG 51 is the average values returned for each row. Expression 44 is any valid expression that returns a numeric value. COUNT 52 returns an integer containing the count value. Asterisk 45 returns a count of the number of rows in the output set, and DISTINCT column name 46 returns a count of the distinct values found in the column. MIN 53 and MAX 54 returns the minimum or maximum value. Expressions 47 and 48 are any valid expression that returns a numeric value. SUM 55 returns algebraic sum of an expression. Expression 49 is a valid numeric expression. If column functions 43 are used in a select-list 23 and the SELECT statement does not contain a GROUP BY clause 13, all fields in the select-list 23 must be column functions 43 or other expressions that do not include column names.

The FROM clause 11 specifies the names of the tables and views from which to retrieve the data specified by the SELECT clause 10. A FROM clause may contain one or more table name. If more than one table name is specified, the tables are joined together to define a cartesian product of the input tables. This is an elementary form of join. The WHERE clause 12 of the SELECT statement is used to reduce the number of rows brought to the output to a meaningful set. For the purposes of this invention, only one table SELECT statements will be discussed. A correlation name 25 may be specified and is an alternate name used for a table name. The name is used in place of the table name in qualifying a column name anywhere in the SELECT statement.

The WHERE clause 12 includes a single predicate 26 (simple or complex) used to determine which input table rows generate output data. A simple predicate is a test between two expressions 62 and 60 and an operator 61. The format for the first six operators 63, 64, 65, 66, 67, and 68 is obvious. The BETWEEN 69 predicate is satisfied if the value of expression1 70 is equal to or greater than expression2 72 and equal to or less than expression3 73. The NOT keyword 71 yields a value of true if expression1 70 is less than expression2 72 or greater than expression3 73.

14

The IN 74 predicate is true if expression1 75 matches expression2 77, or if the NOT keyword 76 is used, does not match expression2 77. This is equivalent to a simple predicate of the form: expression1 = expression2. The IN 74 predicate is true if expression1 78 matches any of the values in the list 80, or if the NOT keyword 79 is used, does not match any value in the list 80. The values in the list can be constants.

The IS NULL 81 predicate is true if the value of the column name 82 is null or, if the NOT keyword 83 is used, if it is not null. The LIKE 84 predicate is true if the value of the column name 85 matches a pattern specified in the expression 87, or if the NOT keyword 86 is used, does not match the pattern specified in the expression 87. The value of the column name 85 must be a character string. The expression 87 can be a character string. The pattern in a character string can optionally include special characters underscore and percent. The underscore character means to allow any character to fill the position in the string. The percent means to allow any number of characters to fill that position in the string. For example, ABC could produce values 12ABC OR XZABC. %ABC could product ABC, 12ABC, OR 123456ABC. _ABC%D% could product 1ABCD, 2ABCXXXXD, or 3ABCDXXXX.

Complex predicates combine several simple predicates together to yield a single truth value of true or false. Simple predicates can be combined using the AND and OR operators. A WHERE clause 12 is not required. The GROUP BY clause 13 is used in conjunction with column functions 43 to deliver summary rows. Without this clause, a select-list 23 with column functions returns a single row for the entire SELECT statement. With this clause, it returns a row having the column function values for each distinct value of the fields in the GROUP BY clause. Column name 27 defines the name of a column that exists in the input table. This clause allows the column names used in the GROUP BY clause to be used in the select-list 23. They are not required to be in the select-list.

The HAVING clause 14 is used to qualify summary rows for output. A summary row results when column functions 43 are used in the select-list 23. If no GROUP BY clause 13 is used, there is one summary row; otherwise, there are multiples to be tested against the HAVING clause 14. A predicate 28 is a standard complex predicate where the expressions can contain only constants 40, column names 27 used in the GROUP BY clause 13, or column functions 43 used in the select-list 23. A statement may contain both a WHERE clause 12 and a HAVING clause 14. The WHERE clause determines which rows of the input table to use in generating a summary row. The HAVING clause tests the summary row for selection as an output row.

The ORDER BY clause 15 is used to order the output rows. If not used, the order of the rows returned is indeterminate. If more than one column name 29 is specified, the rows are ordered first by the values of the first identified column, then by the values of the second identified column, and so on. Column name 29 is the name of a column as used in the select-list. The name must be used in the select-list as a single item, not part of an expression. ASC 30 indicates ascending order for this field. DESC 31 indicates descending order for this field.

While the invention has been shown and described with reference to particular embodiments thereof, it will be understood by those skilled in the art that the foregoing and other changes in form and details may be made therein without departing from the spirit and scope of the invention.

**Claims**

1. A method of operating a computer system for generating a search command clause for accessing a database comprising the steps of:

generating an displaying a first prompt relating to a first component of the clause;
registering a response to said first prompt;
generating and displaying a second prompt relating to a second component of the clause in response to the registered response to said first prompt; and
registering a response to said second prompt,

wherein said registered responses comprise required components of the search command clause.

2. A method according to claim 1 wherein said search command clause has first, second and third components, and including the further steps of:

generating and displaying a third prompt for said third component of the clause; and
registering a response to the third prompt, said response comprising said third component of the search command.

15

3. A method according to claim 1 or claim 2, in which said first component of the search clause is a complex function.

4. A method according to claim 3, in which said complex function is a summary function or an expression.

5. A method according to any of the previous claims, in which each pair of steps of generating and displaying and registering comprises the steps of:

generating and displaying a prompt window with a plurality of response choices; and
registering selection of one or more of the response choices.

6. A method according to any one of the previous claims, wherein said second component is a comparison operator, said second prompt includes response choices for defining said comparison operator, and said second prompt is automatically displayed upon registration of the response to the first prompt.

7. A data processing system for database operation comprising means for generating and displaying a first prompt relating to a first component of a search command clause for the database, means for registering a response to said first prompt, means for generating and displaying a second prompt relating to a second component of the clause and means for registering a response to said second prompt, wherein said registered responses comprise required components of the search command clause.

8. A system according to claim 7 wherein said search command clause has first, second and third components, and including means for generating and displaying a third prompt for said third component of the clause, and means for registering a response to the third prompt, said response comprising said third component of the search command.

9. A system according to claim 7 or claim 8, in which said first component of the search clause is a complex function.

10. A system according to claim 9, in which said complex function is a summary function or an expression.

11. A system according to any one of claims 7 to 10, in which each means for generating and displaying and for registering comprises means for generating and displaying a prompt window with a plurality of response choices, and means for registering selection of one or more of the response choices.

12. A system according to any one of claims 7 to 11, wherein said second component is a comparison operator, said second prompt includes response choices for defining said comparison operator, and said second prompt is automatically displayed upon registration of the response to the first prompt.

STAFF

| ID | NAME | DEPT | JOB | YEARS | SALARY | COMM |
|---|---|---|---|---|---|---|
| 10 | SANDERS | 20 | MGR | 7 | 18357.50 | – |
| 20 | PERNAL | 20 | SALES | 8 | 18171.25 | 612.45 |
| 30 | MARENGHI | 38 | MGR | 5 | 17506.75 | – |
| 40 | O'BRIEN | 38 | SALES | 6 | 18006.00 | 846.55 |
| 50 | HANES | 15 | MGR | 10 | 20659.00 | – |
| 60 | QUIGLEY | 38 | SALES | – | 16808.30 | 650.25 |
| 70 | ROTHMAN | 15 | SALES | 7 | 15502.83 | 1152.00 |
| 80 | JAMES | 20 | CLERK | – | 13504.60 | 128.20 |
| 90 | KOONITZ | 42 | SALES | 6 | 18001.75 | 1386.70 |
| 100 | PLOTZ | 42 | MGR | 7 | 18352.80 | – |
| 110 | NGAN | 15 | CLERK | 5 | 12508.20 | 206.60 |
| 120 | NAUGHTON | 38 | CLERK | – | 12954.75 | 180.00 |
| 130 | YAMAGUCHI | 42 | CLERK | 6 | 10505.90 | 75.60 |
| 140 | FRAYE | 51 | MGR | 6 | 21450.00 | – |
| 150 | WILLIAMS | 51 | SALES | 6 | 19456.50 | 637.65 |
| 160 | MOLINARE | 10 | MGR | 7 | 22959.20 | – |
| 170 | KERMISCH | 15 | CLERK | 4 | 12258.50 | 110.10 |
| 180 | ABRAHAM | 38 | CLERK | 3 | 12009.75 | 236.50 |
| 190 | SNEIDER | 20 | CLERK | 8 | 14252.75 | 126.50 |
| 200 | SCOUTTEN | 42 | CLERK | – | 11508.60 | 84.20 |
| 210 | LU | 10 | MGR | 10 | 20010.00 | – |
| 220 | SMITH | 51 | SALES | 7 | 17654.50 | 992.80 |
| 230 | LUNDQIST | 51 | CLERK | 3 | 13369.80 | 189.65 |
| 240 | DANIELS | 10 | MGR | 5 | 19260.25 | – |
| 250 | WHEELER | 51 | CLERK | 6 | 14460.00 | 513.30 |
| 260 | JONES | 10 | MGR | 12 | 21234.00 | – |
| 270 | LEA | 66 | MGR | 9 | 18555.50 | – |
| 280 | WILSON | 66 | SALES | 9 | 18674.50 | 811.50 |
| 290 | QUILL | 84 | MGR | 10 | 19818.00 | – |
| 300 | DAVIS | 84 | SALES | 5 | 15454.50 | 806.10 |
| 310 | GRAHAM | 66 | SALES | 13 | 21000.00 | 200.30 |
| 320 | GONZALES | 66 | SALES | 4 | 16858.20 | 844.00 |
| 330 | BURKE | 66 | CLERK | 1 | 10988.00 | 55.50 |
| 340 | EDWARDS | 84 | SALES | 7 | 17844.00 | 1285.00 |
| 350 | GAFNEY | 84 | CLERK | 5 | 13030.50 | 188.00 |

F I G.   1

FIG. 2

```
ID     NAME
-----  ------

150    WILLIAMS
250    WHEELER
280    WILSON
```

FIG. 3F

```
ID   NAME          SALARY
---- ------        ----

20   PERNAL        18171.25
40   O'BRIEN       18006.00
90   KOONITZ       18001.75
150  WILLIAMS      19456.50
220  SMITH         17654.50
280  WILSON        18674.50
310  GRAHAM        21000.00
340  EDWARDS       17844.00
```

FIG. 4E

```
DEPT   MIN(SALARY)    MAX(SALARY)
----   -------        -------

15     12258.50       20659.80
20     13504.60       18357.50
38     12009.75       18006.00
42     10505.90       18352.80
51     13369.80       21150.00
66     10988.00       21000.00
84     13030.50       19818.00
```

FIG. 5I

```
NAME      DEPT
-----     ----
GRAHAM      66
WILLIAMS    51
```

FIG. 6G

SELECT STATEMENT:
   SELECT ID, NAME
   FROM Q. STAFF
   WHERE NAME LIKE 'W%'

---

Actions   Edit   Specify   Display   Exit                          | F1=Help

Prompted Query "---NEW---"                                  187          (Scroll)

Select Edit above to revise a que | ‌                Tables                    (Scroll)

   Tables:                          | Type one or more table names;  then press
   > ...                            | Enter.
                              188    | [STAFF            >
                                     | [                 >
                                     | [                 >
                                     | [                 >
                                     | [                 >
                                     | [                 >
                                     |
                                     | Enter   Esc=Cancel   F1=Help   F4=List

**FIG. 3A**

EP 0 314 279 A2

Prompted Query "---NEW---" 190                                              (Scroll)

Select Edit above to revise a | ┌─────────────── Columns ───────────────┐

Tables: 189 | Select one or more columns, or select either
🔲   Q. STAFF | expression or function;  then press Enter.

Columns: | ┌─────────── Column Names ───────────── (scroll) ─┐

> ... | 
| 192 ── 🔲 STAFF – all              194
| 193 ── > ID
|         > NAME
|         🔲 DEPT
|         🔲 JOB
|         🔲 YEARS
|         🔲 SALARY
|         🔲 COMM
| 194 ── 🔲 Expression (A+ B) ...
| 195 ── 🔲 Summary functions (SUM, etc.) ...

**FIG.  3B** | Enter   Esc=Cancel    F1=Help

EP 0 314 279 A2

Actions    Edit    Specify    Display    · Exit ·                    | F1=Help

Prompted Query "———NEW———" _496                    (Scroll)

Select Edit above to revise a | ┌──────────────── Rows ────────────────┐
Tables:                        | Select a column, an expression, or function;
▣  Q. STAFF                     | then press Enter.
                               | ┌─ Column Names ──────────────── (Scroll) ─┐
Columns:                       | │                          `— 197           │
▣   ID ⟋⟍204                    | │   STAFF                                   │
▣   NAME ⟋                      | │ ▣    ID                                   │
                               | │ >    NAME                                 │
Row Conditions:                | │ ▣    DEPT                                  │
>  If . . .                     | │ ▣    JOB                                   │
                               | │ ▣    YEARS                                 │
                               | │ ▣    SALARY                                │
                               | │ ▣    COMM                                  │
                               | │ ▣    YEARS                                 │
                        198 ⟍  | ├───────────────────────────────────────────┤
                        199 ⟍  | ▣ Expression (A+B, etc.) . . .
FIG.  3C                        | ▣ Summary function  (SUM, etc.) . . .
                               | └──── Esc=Cancel   F1=Help ────┘

EP 0 314 279 A2

Prompted Query "---NEW---"                    (Scroll)

Select Edit above to revise a

Tables:

☒ Q. STAFF

Columns:

☒ ID
☒ NAME

Row Conditions:

> If NAME ...

204

202

Rows          ⌐200

Comparison Operators

Select the verb and a comparison; then press Enter.

Verb . . . . . . . . . .   >  Is
                           ☒  Is not
Comparison . . . .         ☒  Equal to ...
                           ☒  Less than ...
                           ☒  Greater than ...
                           ☒  Between ....
                           >  Starting with...
                           ☒  Ending with ...
                           ☒  Containing ...
                           ☒  NULL

Enter    Esc=Cancel    F1=Help

FIG. 3D

EP 0 314 279 A2

Actions    Edit    Specify    Display    Exit                                    F1=Help
_____
                    Prompted Query "---NEW---"                                   (Scroll)

Select Edit above to revise a │              Rows
   Tables:                     │─────────────────────────────────────────────      ;
 ▣  Q. STAFF                   │           Comparison  Operators
                               │──────────────────────────────────────────
                               │             Starting  With
   Columns:                    │                     ⌒ 203
 ▣  ID                         │  Type one or more values;  then press Enter.
 ▣  NAME                       │
                               │  Starting with .. [ W                          >
   Row Conditions:             │  Or  . . . . . . . . [                         >
 >  If  NAME  Starts with...   │  Or  . . . . . . . . [                         >
              ⌒                │  Or  . . . . . . . . [                         >
               205             │  Or  . . . . . . . . [                         >
                               │  Or  . . . . . . . . [                         >
                               │─────────────────────────────────────────────
                               │  Enter    Esc=Cancel    F1=Help
                               │─────────────────────────────────────────────
                               │              ▣  NULL
                               │─────────────────────────────────────────────
                               │  Enter    Esc=Cancel    F1=Help

FIG. 3E

| Actions | Edit | Specify | Display | Exit | | F1=Help |
|---------|------|---------|---------|------|--|---------|

Prompted Query. "--- NEW ---"                              (Scroll)

Select Edit above to revise a | Rows —⌐ 224

Tables: ⌐ 220

□   Q. STAFF

| Select a column, an expression, or function; then press Enter. |

Columns:

□   ID
□   NAME
□   SALARY

| Column Names ⌐ (Scroll) |
| —222 |

    STAFF
□      ID
□      NAME
□      DEPT
□      JOB
□      YEARS
□      SALARY
□      COMM

Row Conditions:

>   If ...

223 ⌐ > Expression (A + B, etc.) ...
□ Summary function (SUM, etc.) ...

**FIG. 4A**

Esc=Cancel     F1=Help

EP 0 314 279 A2

Prompted Query "———NEW———"                    (Scroll)

Select Edit above to revise a | Rows

Tables: | Select a column, an expression, or function;
⊞    Q. STAFF | then press Enter.

Columns: | Column Names                    (Scroll)
⊞    ID
⊞    NAME | STAFF
⊞    SALARY | ⊞    ID
| ⊞    NAME
Row Conditions: | ⊞    DEPT

Expression ⌐~224

Type an expression. You can use the following arithmetic operators:
add (+), subtract (−), multiply (✱), and divide (/); then press Enter.

⌐225

[SALARY + COMM_                                    >

Enter    Esc = Cancel    F1 = Help    F4 = List

**FIG. 4B**

EP 0 314 279 A2

Prompted Query "--- NEW ---"                          (Scroll)

Select Edit above to revise a | ........ Rows ⌐ 227

Tables :                        Comparison Operators

⊡ Q. STAFF

Select the verb and a comparison; then
press Enter. ⌐ 228

Columns :

Verb . . . . . . .  > Is

⊡ ID                            ⊡ Is not
⊡ NAME
⊡ SALARY            Comparison  . . .  ⊡ Equal to ...
                                ⊡ Less than ...

Row Conditions :          .228 ⌐⤳> Greater than ...
> If SALARY+COMM...              ⊡ Between ...
        ⌐₂₂₆                        Starting with ...
                          230 ⌐⤳ Ending with ...
                                   Containing ...
                                ⊡ NULL

FIG.  4C

Enter    Esc=Cancel      F1=Help

EP 0 314 279 A2

Actions   Edit   Specify   Display   Exit   :   | F1=Help

Prompted Query "———NEW———"        (Scroll)

Select Edit above to revise a | Rows

    Tables: | Comparison Operators | ;

    ▣ Q. STAFF

    Columns: | Greater Than 232
    | Type a value, column name, or expression;
    ▣ ID | then press Enter .
    ▣ NAME
    ▣ SALARY | 233
    | [ 18000 _                    >
                                231
    Row Conditions :   ⌇ | Enter   Esc=Cancel   F1=Help   F4=List
    > If SALARY+COMM Is Greater |
    | ▣ Between ...
    | Starting with...
    | Ending with...
    | Containing ...
    | ▣ NULL
    | Enter   Esc=Cancel   F1=Help

**FIG. 4D**

EP 0 314 279 A2

Prompted Query "---NEW---"                    (Scroll)

Select Edit above to revise a | Columns 〜232

Tables:                          Select one or more columns, or select either
▣  Q. STAFF                      expression or function;  then press Enter.

Columns:                         ┌─────────────────────────────────────────
▣  DEPT                          │              Column Names        (scroll)
>  ...                           ├─────────────────────────────────────────
                                 │ ▣ STAFF – all
                                 │ ▣    ID
                                 │ ▣    NAME
                                 │ ▣    DEPT
                                 │ ▣    JOB
                                 │ ▣    YEARS
                                 │ ▣    SALARY
                                 │ ▣    COMM
                                 └─────────────────────────────────────────
                                   ▣ Expression (A+B)...
                         233〜  ─> Summary functions (SUM, etc.)...
                                 ─────────────────────────────────────────
**FIG.   5A**                    Enter        Esc=Cancel      F1=Help

EP 0 314 279 A2

Prompted Query "---NEW---"                    (Scroll)

Select Edit above to revise a | Columns  ⟋234                     elect either
                                                                    ss Enter.
  Tables:                    Summary Functions
  ▣  Q. STAFF                                                       (scroll).
                        Select one or more items ;
  Columns:              then press Enter.
  ▣  DEPT
  >  ...                    ▣  1.  Count of (COUNT)
                            ▣  2.  Average of (AVG)...
                            ▣  3.  Sum of (SUM)...
                235 ⟍  >  4.  Minimum of (MIN)...
                       >  5.  Maximum of (MAX)...

                        Enter   Esc=Cancel   F1=Help

                        ▣  Expression (A+B)...
                        >  Summary functions (SUM, etc.)...

**FIG.  5B**            Enter    Esc=Cancel    F1=Help

EP 0 314 279 A2

Actions    Edit    Specify    Display    Exit    | F1=Help
_____

Prompted Query "———NEW———"  ⌐236    (Scroll)

Select Edit above to revise a ┌─────────────────────────────────────────┐
                             │        Summary Function Items ⌐236       │
  Tables:                    │  Select a column, or an expression; then │
  ⊞  Q. STAFF               │  press Enter.                            │
                             │  ┌──────────────────────────────────────┐│
  Columns:                   │  │    Column Names           (scroll)   ││
  ⊟  DEPT                    │  │                                      ││
  ⊞  MIN(...     ⌐237        │  │  STAFF                               ││
  ⊟  MAX(...  ⌐237           │  │  ⊡    ID                             ││
                             │  │       NAME                           ││
                             │  │  ⊡    DEPT                           ││
                             │  │       JOB                            ││
                             │  │  ⊡    YEARS      ⌐238                ││
                             │  │  >    SALARY ⌐238                    ││
                             │  │  ⊡    COMM                           ││
                        ⊡    │  │                                      ││
                        >    │  └──────────────────────────────────────┘│
                             │  ⊞  Expression (A+B, etc.)...            │
                             ├──────────────────────────────────────────┤
**FIG.  5C**            En│  Esc = Cancel    F1= Help                │
                             └──────────────────────────────────────────┘

Actions   Edit   Specify   Display   Exit                          | F1=Help
─────────────────────────────────────────────────────────────────────────────
                    Prompted Query "───NEW───"                    (Scroll)

Select Edit above to revise a┌─────────────── Rows ───────────────────┐
                             │
   Tables:                   │ Select a column, an expression, or function;
 ▣   Q. STAFF                │ then press Enter.
                             │┌────────────────────────────────────────┐
   Columns:                  ││        Column Names          (Scroll)   │
                             │├────────────────────────────────────────┤
 ▣   DEPT                    ││ ▣    MIN(SALARY)                         │
 ▣   MIN(SALARY)             ││ ▣    MAX(SALARY)                         │
 ▣   MAX(SALARY)             ││    STAFF                                 │
                             ││ ▣    ID                                  │
                             ││ ▣    NAME                                │
   Row Conditions:           ││ ▣    DEPT                                │
 >   If ...                  ││ ▣    JOB                                 │
                             ││ ▣    YEARS                               │
                             ││ ▣    SALARY                              │
                             │└────────────────────────────────────────┘
                             │ ▣  Expression (A+B, etc.)...
                    239 ────→│ >  Summary function (SUM, etc.)...
                             ├─────────────────────────────────────────┤
 FIG.   5D                   │ Esc=Cancel     F1=Help                    │
                             └─────────────────────────────────────────┘

EP 0 314 279 A2

Prompted Query "---NEW---"                    (Scroll)

Select Edit above to revise a

  Tables:
  ▣   Q. STAFF

  Columns:

  ▣   DEPT
  ▣   MIN(SALARY)
  ▣   MAX(SALARY)        241⌐

  Row Conditions:
  >  If . . .

┌─────────────────────────────────────────────┐
│              240⌐  Rows                       │
│  ┌────────────────────────────────────────┐  │
│  │        Summary  Functions               │  │
│  │                                         │  │
│  │  Select one item;  then press           │  │
│  │  press  Enter.                          │  │
│  │                                         │  │
│  │   ▣   1.  Count of (COUNT)              │  │
│  │   >   2.  Average of (AVG)...           │  │
│  │   ▣   3.  Sum of (SUM) ...              │  │
│  │   ▣   4.  Minimum of (MIN)...           │  │
│  │   ▣   5.  Maximum of (MAX)....          │  │
│  │                                         │  │
│  ├────────────────────────────────────────┤  │
│  │  Enter   Esc=Cancel    F1=Help          │  │
│  └────────────────────────────────────────┘  │
│  ▣    SALARY                                  │
│                                               │
│  ▣  Expression (A+B, etc.)...                 │
│  > Summary function (SUM, etc.)...            │
│                                               │
│  Esc=Cancel   F1=Help                         │
└─────────────────────────────────────────────┘

or function;

(Scroll)

FIG.   5E

EP 0 314 279 A2

Prompted Query "———NEW———"    ⁻ 243    (Scroll) ·

Select Edit above to revise a | Summary Function Items

Tables:

▣  Q.STAFF

Select a column, or an expression;  then
press Enter.

Columns:

▣  DEPT
▣  MIN (SALARY)
▣  MAX (SALARY) ·

| Column Names | (scroll) |

STAFF
▣    ID
     NAME
▣    DEPT
     JOB
▣    YEARS
>    SALARY⌐⌐244
▣    COMM

Row Conditions:

>  If AVG(...

⌐242

▣  Expression (A+B, etc.) ...

Esc = Cancel    F1= Help

**FIG.  5F**

EP 0 314 279 A2

Actions   Edit   Specify   Display   Exit   | F1=Help

Prompted Query " – – –NEW– – –"                    (Scroll)

Select Edit above to revise a

  Tables:
  ⊡ Q. STAFF

  Columns:
  ⊡ DEPT
  ⊡ MIN(SALARY)
  ⊡ MAX(SALARY)

  Row Conditions:
  > If AVG(SALARY)...
              └245

Rows ⟋246

Comparison Operators

Select the verb and a comparison; then
press Enter.

Verb  .  .  .  .  .> Is —⟋248

              ⊡ Is not

Comparison . . . ⊡ Equal to ... ⟋249
              > Less than...⟋
              ⊡ Greater than ...
              ⊡ Between ...
              Starting with...
  247 —⟋ Ending with ...
              Containing...
              ⊡ NULL

Enter   Esc=Cancel   F1=Help

**FIG. 5G**

EP 0 314 279 A2

Actions   Edit   Specify   Display   Exit                    | F1=Help

Prompted Query  "———NEW———"              (Scroll)

Select Edit above to revise a | Rows

Tables:                              Comparison Operators                    ;

□ Q. STAFF

                                      Less Than ⌣250
Columns:                        Type a value, column name, or expression;
□ DEPT                          then press Enter.
□ MIN(SALARY)
□ MAX(SALARY)                        ⌐252
                                [18000_                                >

Row Conditions:
> If AVG(SALARY) Is Less Th    Enter   Esc=Cancel   F1=Help   F4=List
                    ⌐251
                                            □ Between...
                                              Starting with...
                                              Ending with...
                                              Containing...
                                            □ NULL

FIG. 5H                        Enter   Esc=Cancel   F1=Help

```
SELECT STATEMENT:
   SELECT NAME, DEPT
   FROM Q. STAFF
   GROUP BY NAME, DEPT
   HAVING SUM(SALARY+COMM) BETWEEN 20000 AND 40000
```

| Actions | Edit | Specify | Display | Exit | | F1=Help |
|---|---|---|---|---|---|---|

Prompted Query "———NEW———"  (Scroll)

Select Edit above to revise a

Tables:
⊡  Q. STAFF

Columns:
⊠  NAME
⊡  DEPT

Row Conditions:
>  If...

Rows ⟋253
Select a column, an expression, or function;
then press Enter.

| Column Names | (Scroll) |
|---|---|

STAFF
⊞    ID
⊡    NAME
⊠    DEPT
⊡    JOB
⊡    YEARS
⊡    SALARY
⊡    COMM
⊡    YEARS

⊡  Expression (A+B, etc.)...
254 ⟶  >  Summary function (SUM, etc.)...

Esc=Cancel   F1=Help

**FIG. 6A**

EP 0 314 279 A2

Actions   Edit   Specify   Display     Exit                    | F1=Help

Prompted Query "---NEW---"                    (Scroll)

Select Edit above to revise a

Tables:
▣  Q. STAFF

Columns:
▣  NAME
▣  DEPT

Row Conditions:
>  If...

Columns _255

Summary Functions

Select one or more items;
then press Enter.

▣   1.   Count of (COUNT)
▣   2.   Average of (AVG)...
256 —— > 3.   Sum of (SUM)...
▣   4.   Minimum of (MIN)...
▣   5.   Maximum of (MAX)...

Enter   Esc=Cancel   F1=Help

elect either
ss Enter.

(scroll)

▣  Expression (A+B)...
>  Summary functions (SUM, etc.)...

Enter    Esc=Cancel   F1=Help

**FIG.  6B**

EP 0 314 279 A2

Actions    Edit    Specify    Display    Exit                    | F1-Help

Prompted Query "--- NEW---"⌐257            (Scroll)

Select Edit above to revise a │        Summary Function Items

  Tables:                        Select a column, or an expression; then
  ▣  Q. STAFF                    press Enter.

  Columns:                       ┌──────────────────────────────────────┐
  ▣  NAME                        │      Column Names          (scroll)  │
  ▣  DEPT                        ├──────────────────────────────────────┤
                                 │    STAFF        ⌐258                  │
                                 │  ▣    ID                             │
  Row Conditions:                │       NAME                          │
  >  If SUM(...                  │  ▣    DEPT                           │
                                 │       JOB                           │
                                 │  ▣    YEARS                         │
                                 │  ▣    SALARY                        │
                                 │  ▣    COMM                          │
                                 │  ⌐259                               │
                              ▣  └──────────────────────────────────────┘
                              >   └> Expression (A+B, etc.)...

**FIG. 6C**              En  Esc=Cancel   F1=Help

EP 0 314 279 A2

Prompted Query "---NEW---"                    (Scroll)

Select Edit above to revise a

  Tables:
▣  Q. STAFF

  Columns:
▣  NAME
▣  DEPT

  Row Conditions:

Summary Function Items

Select a column, or an expression; then
press Enter.

| Column Names | (scroll) |
|---|---|
| STAFF | |
| ▣    ID | |
|    NAME | |

Expression  ⌐~ 260

Type an expression. You can use the following arithmetic operators:
add (+), subtract (−), multiply (✳), and divide (/); then press Enter.

⌐ 264
[SALARY + COMM _                                              >

Enter   Esc=Cancel      F1=Help      F4=List

**FIG.  6D**

EP 0 314 279 A2

Prompted Query   "--- NEW---"                    (Scroll)

Select Edit above to revise a

Tables:
- Q. STAFF

Columns:
- NAME
- DEPT

Row Conditions:
> If SUM(SALARY+COMM)...

Rows      262

Comparison Operators

Select the verb and a comparison;   then
press Enter.

Verb . . . . . . .    >  Is   263

                       ▣  Is not

Comparison. . .        ▣  Equal to. . .
                       ▣  Less than. . .
                       ▣  Greater than. . .
        264 →          >  Between . . .
                          Starting with. . .
                          Ending with. . .
                          Containing . . .
                       ▣  NULL

Enter    Esc=Cancel    F1 = Help

FIG.  6E

EP 0 314 279 A2

Prompted Query "———NEW———"                    (Scroll)

Select Edit above to revise a │                Rows

Tables:                    │        Comparison Operators                    ;
▣  Q. STAFF

Columns:                              Between ⌒265
▣  NAME               Type two values, column names, or expressions;
▣  DEPT               then press  Enter.


Row Conditions:        Between . . [20000 ⌒266                    >
>  If SUM(SALARY+COMM) I     And . . . . [40000_                    >

                       Enter    Esc=Cancel    F1=Help    F4=List

                                       Starting with...
                                       Ending with...
                                       Containing...
                                    ▣  NULL

FIG.  6F                    Enter    Esc=Cancel     F1=Help

EP 0 314 279 A2

FIG. 7

Start

A                    100

Prompt for Table Names (s)                    101

User selects Table Name                    102

Validate Table Name for Syntax    No    Display Error
                    103                    Message: In-
Yes                    valid Syntax    104

Validate Table Name for Semantics    No    Display Error
                    105                    Message: Table
Yes                    Not Found    106

User selects more than one table    No
                    107

Yes

Prompt for Join    108

Z    170

Prompt for the next step in the sequence    Escape    360
                    109    Z'

User Selects, for prompts to define the clause:

Tables    Rows    Duplicates

Prompt for    Prompt for    Prompt for
Tables    Rows    Duplicates

    100    115    170
A    C    Z

Columns    Sort

Prompt for    Prompt for
Columns    Sort

    170    170
Z    Z

FIG.  8A

EP 0 314 279 A2

C —115

First Row Condition Clause? —No→ Prompt for AND/OR Connector —121

Display Row Conditions Window —122

Case user selects:

Column name —123 | Expression —125 | Summary Functions —132

124 — Echo the Column and Ellipses

Prompt for An Expression —126

Prompt for Summary Function (MIN, MAX, SUM, AVG, COUNT) —133

Validate the Expression for Syntax —127

Echo the Summary Function with left parenthesis and ellipses —134

128 — Display Error Message: Invalid Syntax    ←No

Prompt for Argument of Summary Function —135

Yes

129 — Validate the Expression for Semantics    No→

130 — Display Error Message: Semantic Error

Yes

Echo the Expression and Ellipses —134

Expression —137

Column Name —136

Prompt for expression and validate for syntax and semantics —139    No

138 — Echo column name, closing parenthesis and ellipses

Yes

Echo expression, closing parenthesis and Ellipses —140

X—141

FIG. 8B

141 X                                                                    150

Test Data Type of Left Side and Set Valid Operators

Display Comparison Operators                                        151

Echo IS or IS NOT, the selected comparison operator,
and ellipses                                            151A

153                                                                           NULL
                                                                              155

| Display Equal To Window | Display Less Than/ Greater Than Window | Display Starting With/Ending With/ Containing Window |

152                                                                      154

151B — User enters a value, column, or expression

157 — 

No | Validate Input for Syntax/ Semantic Errors |

156

Display Error Message and Return to Previous Window

Yes

Echo the validated right side (value, column, or expression)

170                                                                      158

Z

F I G .    8 C

Z'

360

300

Wait for User Input

Process Other Input

305

302

User Input = "Run" Command ?

No

User Input = "Exit" Command ?

306

No

Yes

303

Translate stored query input to database command

Yes

Exit

304

Call database to process query and return data

Display returned data to the user

307

FIG. 8D

SQL ⌇⁹⁷            USER-FRIENDLY NON- ⌇⁹⁸
KEYWORDS          SQL KEYWORD
‾‾‾‾‾‾‾‾          ‾‾‾‾‾‾‾‾‾‾‾‾‾‾‾‾‾

SELECT－－－→ COLUMNS

  DISTINCT－→ DUPLICATES

FROM －－－→ TABLES

WHERE－－－→ ROW CONDITIONS

GROUP BY－－→ (implied when summary functions
              used)

HAVING－－－→ ROW CONDITIONS

ORDER BY－－→ SORT

**F I G. 9**

SELECT [ALL | DISTINCT ] { * | select-list }

    where a select-list is defined as:

1. Constant
2. Column Name
3. Arithmetic Expression
4. Column Function where column functions is defined as:

AVG (expression)

COUNT (*) | COUNT (DISTINCT colname)

MIN (expression)

MAX (expression)

SUM (expression)

FROM tablename [correlname] [, tablename [correlname]]...
[WHERE predicate]

    where the syntax for a predicate is defined as:

    expression1 operator expression2

      where operators are defined as:

$=$      equal to

$<>$    not equal to

$>$      greater than

$<$      less than

$>=$    greater than or equal to

$<=$    less than or equal to

BETWEEN between two values
      where the syntax for BETWEEN is defined as:
      expression1 [NOT] BETWEEN expression2
      AND expression3

IN      in a list of values
      where the syntax for IN is defined as:

# FIG. 10A

expression1 [NOT] IN expression2

expression1 [NOT] IN (value1 [,value2]...)

IS NULL    equal to a null value

where the syntax for NULL is defined as:

colname IS [NOT] NULL

LIKE     matches a pattern

where the syntax for LIKE is defined as:

colname [NOT] LIKE expression

[GROUP BY colname [ , colname]...]

[HAVING predicate]

[ORDER BY {colname | colnum [ASC | DESC]}
,{colname | colnum [ASC | DESC]} ... ]]

# FIG. 10B

PROCESSOR ~350

353

354

MEMORY ~352

KEYBOARD ~351

# FIG. 11